(19) Europäisches Patentamt / European Patent Office / Office européen des brevets

(11) **EP 4 654 270 A1**

(12) **EUROPEAN PATENT APPLICATION**
published in accordance with Art. 153(4) EPC

(43) Date of publication:
26.11.2025 Bulletin 2025/48

(21) Application number: 24872865.1

(22) Date of filing: 24.09.2024

(51) International Patent Classification (IPC):
*H01M 4/04* (2006.01)   *G06Q 50/04* (2012.01)
*G01B 7/004* (2006.01)   *B65H 35/00* (2006.01)
*G06K 19/06* (2006.01)

(52) Cooperative Patent Classification (CPC):
**B65H 35/00; G01B 7/004; G06K 19/06;**
**G06Q 50/04; H01M 4/04;** Y02E 60/10; Y02P 70/50

(86) International application number:
**PCT/KR2024/014391**

(87) International publication number:
**WO 2025/071157 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.09.2023 KR 20230128126

(71) Applicant: **LG Energy Solution, Ltd.**
**Seoul 07335 (KR)**

(72) Inventors:
• **PARK, Wi Dae**
  **Daejeon 34122 (KR)**

• **SIM, Min Kyu**
  **Daejeon 34122 (KR)**
• **BAE, In Bong**
  **Daejeon 34122 (KR)**
• **KIM, Seol Hee**
  **Daejeon 34122 (KR)**
• **JUNG, Jung Youn**
  **Daejeon 34122 (KR)**
• **KIM, Min Su**
  **Daejeon 34122 (KR)**
• **PARK, Jong Seok**
  **Daejeon 34122 (KR)**

(74) Representative: **BCKIP Part mbB**
**MK1**
**Landsbergerstraße 98, 3.Stock**
**80339 München (DE)**

(54) **BATTERY MANUFACTURING SYSTEM AND BATTERY MANUFACTURING METHOD**

(57) Example embodiments provide a battery manufacturing system. The battery manufacturing system includes a coupling device configured to form a plurality of first electrodes including an electrode identifier (ID) from a first electrode sheet to which the electrode ID is allocated at intervals of a pitch, form a plurality of second electrodes from a second electrode sheet, and combine the plurality of first electrodes and the plurality of second electrodes, in which the coupling device includes a controller configured to collect coordinate-related electrode ID data including the electrode ID and at least one of a coordinate of a first electrode sheet and a coordinate of a second electrode that match the electrode ID, based on a first input amount of the first electrode sheet, a second input amount of the second electrode sheet, and an electrode ID sensing signal.

[FIG. 1]

**Description**

[Technical Field]

The present invention relates to a battery manufacturing system and a battery manufacturing method.
This application claims the benefit of priority based on Korean Patent Application No. 10-2023-0128126, filed on September 25, 2023, and the entire content of the Korean patent application is incorporated herein by reference.

[Background Art]

Batteries, and especially, secondary batteries can be charged and discharged multiple times unlike primary batteries. Batteries such as secondary batteries have been widely used as energy sources for various types of wireless devices such as handsets, laptop computers, and cordless vacuum cleaners. Recently, a main use of batteries is moving from mobile devices to mobility, as manufacturing costs per unit capacity of batteries drastically decrease due to improved energy density and economies of scale and a range of battery electric vehicles (BEVs) increases to the same level as fuel vehicles.
Battery cells are manufactured by an electrode process, an assembly process, and an activation process. A plurality of manufactured battery cells are included in a battery module and a battery pack, which are larger units, to be used in an electric vehicle and the like. The electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Related Art Literature]

[Patent Document]

(Patent Document 0001) Korean Laid-open Patent Application No. 10-2023-0025288

[Disclosure]

[Technical Problem]

The present invention is directed to providing a battery manufacturing system and method capable of retrieving history data of the manufacture of a battery.

[Technical Solution]

Example embodiments of the present invention provide a battery manufacturing system. The battery manufacturing system may include a coupling device configured to form a plurality of first electrodes including an electrode identifier (ID) from a first electrode sheet to which the electrode ID is allocated at intervals of a certain pitch, form a plurality of second electrodes from a second electrode sheet, and combine the plurality of first electrodes and the plurality of second electrodes, in which the coupling device includes a controller configured to collect coordinate-related electrode ID data including the electrode ID and at least one of a coordinate of a first electrode and a coordinate of a second electrode that match the electrode ID, based on a first input amount of the first electrode sheet, a second input amount of the second electrode sheet, and an electrode ID sensing signal.
The battery manufacturing system may further include a server configured to store the coordinate-related electrode ID data.
The battery manufacturing system may further include a notching device configured to allocate the electrode ID to the first electrode sheet at the intervals of the certain pitch. The notching device may include a notching machine configured to form electrode tabs on the first electrode sheet at the intervals of the certain pitch, an ID marker configured to mark the electrode ID on the electrode tabs; and a notching controller configured to collect the coordinate-related electrode ID data including the electrode ID and a first coordinate of a position of the first electrode sheet matching the electrode ID in the notching process.
The first coordinate may be obtained based on an unwinding amount signal and/or a winding amount signal of the first electrode sheet when the electrode ID is sensed in the notching process.

The coupling device may include a first electrode cutter configured to cut the first electrode sheet unwound from a first electrode roll to provide the plurality of first electrodes, a second electrode cutter configured to cut the second electrode sheet unwound from a second electrode roll to provide the plurality of second electrodes, and a second electrode ID reader configured to sense an electrode ID of an electrode tab of each of the plurality of first electrodes to generate the electrode ID sensing signal.

The first input amount of the first electrode sheet may be calculated based on a pitch between the plurality of first electrodes and a cut count of the first electrode cutter, and the second input amount of the second electrode sheet may be calculated based on a pitch between the plurality of second electrodes and a cut count of the second electrode cutter.

The coupling device may include a first rotary encoder configured to generate a first input amount signal indicating the first input amount of the first electrode sheet, and a second rotary encoder configured to generate a second input amount signal indicating the second input amount of the second electrode sheet.

The server may store a roll map of each process that includes roll map coordinates indicating positions on the first electrode sheet and the second electrode sheet in a plurality of preceding processes before the allocation of the electrode ID. The server may match at least one of the electrode ID, the coordinate of the first electrode matching the electrode ID, and the coordinate of the second electrode matching the electrode ID to the roll map coordinates.

The battery manufacturing system may further include a subsequent-process event data matching part configured to match at least one of the electrode ID, the coordinate of the first electrode matching the electrode ID, and the coordinate of the second electrode matching the electrode ID to process event data obtained in a plurality of subsequent processes after the combining of the first electrode and the second electrode and/or an ID of at least one higher battery assembly selected from among:

1) an assembly ID of an electrode assembly including at least one assembly of the first electrode and the second electrode;
2) an intermediate product ID of a battery intermediate product including the electrode assembly;
3) a cell ID of a battery cell including the electrode assembly or the battery intermediate product;
4) a stack ID of a battery cell stack including a plurality of such battery cells;
5) a module ID of a battery module including the battery cell stack; and
6) a pack ID of a battery pack including a plurality of such battery modules.

Example embodiments provide a battery manufacturing method. The battery manufacturing method may include allocating an electrode ID to a first electrode sheet at intervals of a certain pitch, forming a plurality of first electrodes with the electrode ID from the first electrode sheet and a plurality of second electrodes from a second electrode sheet, combining the plurality of first electrodes and the plurality of second electrodes, and collecting coordinate-related electrode ID data including the electrode ID and at least one of a coordinate of a first electrode and a coordinate of a second electrode that match the electrode ID.

The electrode ID may be allocated to electrode tabs formed on the first electrode sheet at the intervals of the certain pitch by notching.

In the battery manufacturing method, information of a position of the first electrode sheet corresponding to the electrode ID in the notching process may be obtained as a first coordinate, and at least one of the electrode ID, the coordinate of the first electrode matching the electrode ID, and the coordinate of the second electrode matching the electrode ID may be matched to the first coordinate.

The coordinate-related electrode ID data may be collected based on a first input amount of the first electrode sheet, a second input amount of the second electrode sheet, and an electrode ID sensing signal.

The electrode ID sensing signal may be generated based on sensing of the electrode ID.

The first input amount of the first electrode sheet may be calculated based on a pitch between the plurality of first electrodes and a cut count of a first electrode cutter, and the second input amount of the second electrode sheet may be calculated based on a pitch between the plurality of second electrodes and a cut count of a second electrode cutter.

The first input amount of the first electrode sheet may be determined by a first input amount signal generated by a first rotary encoder configured to sense an amount of rotation of a first electrode unwinder configured to unwind the first electrode sheet, and the second input amount of the second electrode sheet may be determined by a second input amount signal generated by a second rotary encoder configured to sense an amount of rotation of a second electrode unwinder configured to unwind the second electrode sheet.

The battery manufacturing method may further include, in a plurality of preceding processes before the allocation of the electrode ID, obtaining coordinates indicating positions on the first and second electrode sheets in each process when the first electrode sheet and the second electrode sheet are moved while a certain operation is performed on the first and second electrode sheets, and matching at least one of a coordinate of the first electrode sheet and a coordinate of the second electrode sheet in each process to at least one of the electrode ID, the coordinate of the first electrode matching the electrode ID, and the coordinate of the second electrode matching the electrode ID.

At least one of the coordinate of the first electrode sheet and the coordinate of the second electrode sheet in each process may be roll map coordinates collected based on an input amount and/or an exhaustion amount of the first or second electrode sheet in a plurality of processes.

The battery manufacturing method may further include matching at least one of the electrode ID, the coordinate of the first electrode matching the electrode ID, and the coordinate of the second electrode matching the electrode ID to process event data obtained in a plurality of subsequent processes after the combining the first electrode and the second electrode and/or an ID of at least one higher battery assembly selected from among:

    1) an assembly ID of an electrode assembly including at least one assembly of the first electrode and the second electrode;
    2) an intermediate product ID of a battery intermediate product including the electrode assembly;
    3) a cell ID of a battery cell including the electrode assembly or the battery intermediate product;
    4) a stack ID of a battery cell stack including a plurality of such battery cells;
    5) a module ID of a battery module including the battery cell stack; and
    6) a pack ID of a battery pack including a plurality of such battery modules.

Example embodiments provide an electrode assembly including at least one assembly of a first electrode with an electrode ID and a second electrode with a coordinate matching the electrode ID, in which the electrode assembly includes an assembly ID corresponding to the electrode ID.

Example embodiments provide at least one higher battery assembly including the electrode assembly, in which the at least one higher battery assembly is selected from among:

    1) battery intermediate product including the electrode assembly;
    2) a battery intermediate product including the electrode assembly and having an intermediate product ID corresponding to the assembly ID;
    3) a battery cell including the electrode assembly or the battery intermediate product;
    4) a battery cell including the electrode assembly or the battery intermediate product, and having a cell ID corresponding to the electrode assembly ID or the intermediate product ID;
    5) a battery cell stack including a plurality of such battery cells;
    6) a battery cell stack including a plurality of battery cells and having a stack ID corresponding to the cell ID;
    7) a battery module including the battery cell stack;
    8) a battery module including the battery cell stack and having a module ID corresponding to the stack ID;
    9) a battery pack including a plurality of such battery modules; and
    10) a battery pack including a plurality of battery modules and having a pack ID corresponding to the module ID.

[Advantageous Effects]

According to example embodiments of the present invention, traceability of a roll map and an intermediate product, such as a mono-cell or a bi-cell, which are generated in an electrode manufacturing process may be improved. In addition, traceability may be improved in terms of a relationship between an assembling process of an intermediate product and a subsequent process after the assembly process. Accordingly, the reliability of the manufacture of a battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

    FIG. 1 illustrate a battery manufacturing system according to example embodiments.
    FIG. 2 illustrates a notching device according to example embodiments.
    FIGS. 3 and 4 illustrate a lamination device according to example embodiments.
    FIG. 5 illustrates relative positions of elements with respect to a positive electrode sheet (ESP).
    FIG. 6 illustrates relative positions of elements with respect to a negative electrode sheet (ESN).
    FIG. 7 illustrates roll maps generated in a plurality of preceding processes before a coupling process.

FIG. 8 illustrates data matching roll map coordinates.

FIG. 9 illustrates a subsequent-process event data matching unit according to example embodiments.

FIG. 10 illustrates matching of data of a battery manufacturing system according to example embodiments.

FIG. 11 is a flowchart of a battery manufacturing method according to example embodiments.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and may be understood according to meanings and concepts corresponding to the present invention on the basis of the principle that the inventor(s) of the application may appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention may not be described in detail when it is determined that they would obscure the subject matter of the present invention due to unnecessary detail.

Because embodiments of the present invention are provided to more fully explain the present invention to those of ordinary skill in the art, the shapes, sizes, etc., of components illustrated in the drawings may be exaggerated, omitted, or schematically illustrated for clarity. Therefore, it should be understood that the sizes or proportions of components may not fully reflect the actual sizes or proportions thereof.

(First Embodiment)

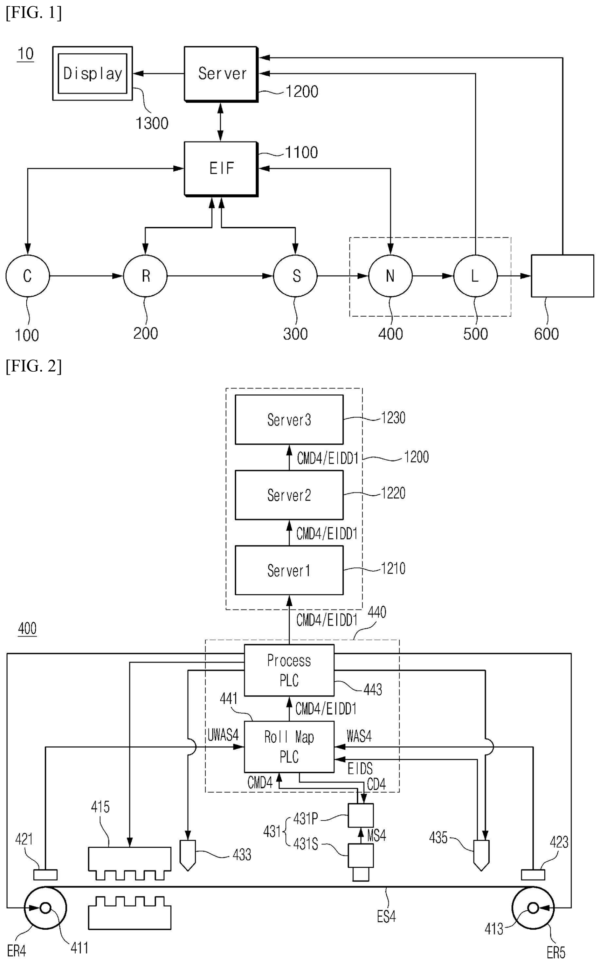

FIG. 1 illustrate a battery manufacturing system according to example embodiments.

FIG. 2 illustrates a notching device according to example embodiments.

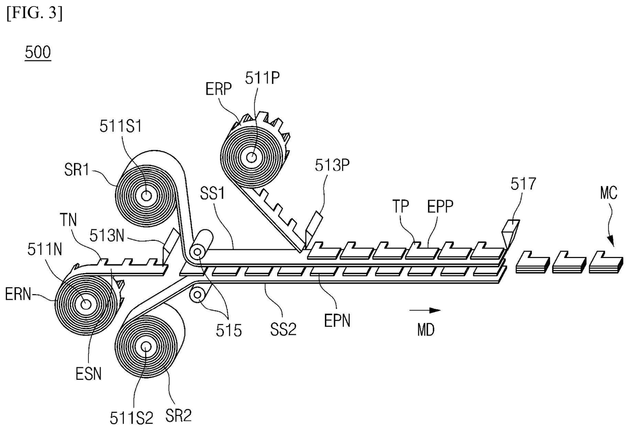

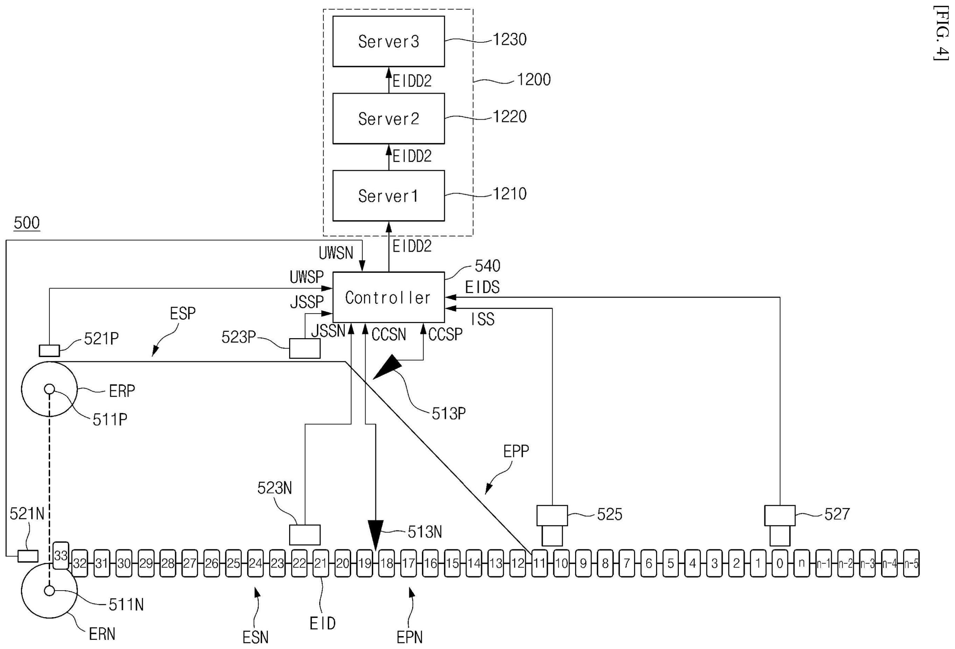

FIGS. 3 and 4 illustrate a coupling device according to example embodiments.

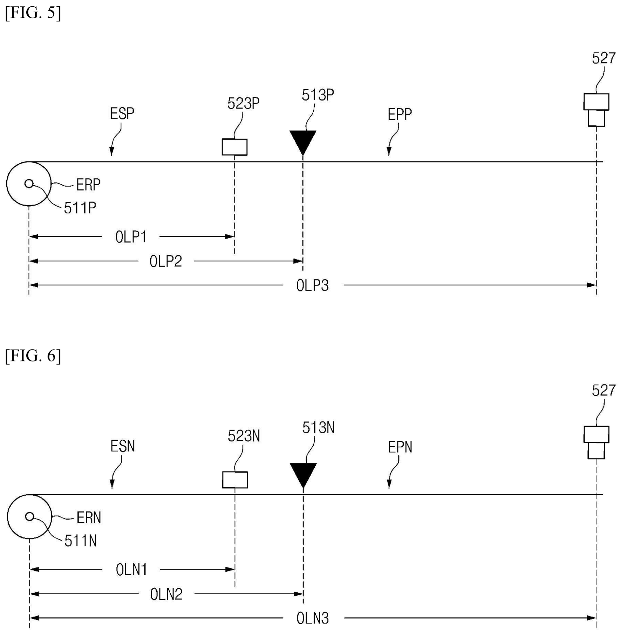

FIG. 5 illustrates relative positions of elements with respect to a positive electrode sheet ESP.

FIG. 6 illustrates relative positions of elements with respect to a negative electrode sheet ESN.

FIG. 1 illustrate a battery manufacturing system 10 according to example embodiments.

Referring to FIG. 1, the battery manufacturing system 10 may include a coating device 100, a roll pressing device 200, a slitting device 300, a notching device 400, a coupling device 500, a subsequent-process device 600, an equipment interface (EIF) 1100, a server 1200, and a display device 1300.

The battery manufacturing system 10 may be configured to perform a series of roll-to-roll processes to manufacture a battery cell (e.g., a pouch type battery cell, a prismatic battery cell, or a cylindrical battery cell).

The coating process, the roll pressing process, and the slitting process are included in an electrode manufacturing process in which an electrode is applied to an electrode sheet. A notching process is a process of forming an electrode tab by processing an electrode sheet, and a coupling process is a process of manufacturing a unit cell such as a mono-cell or a bi-cell by stacking electrodes with electrode tabs. The notching process and a coupling process (e.g., a lamination process, a lamination and stacking process, a lamination and folding process, or a zigzag stacking process such as a zigzag stacking (ZZS) process or an advanced zigzag stacking (AZS) process) are included in an assembly process.

In the lamination and stacking process (L&S process), such unit cells are stacked to form an electrode assembly of a stack cell type. In the lamination and folding process (L&F process), such unit cells are folded by a separator film to form an electrode assembly of a folding cell type.

In a process such as the ZZS process or the AZS process, electrodes on which electrode tabs are formed are sequentially stacked between zigzag-shaped separators to simultaneously combine and stack the electrodes, thereby manufacturing an electrode assembly.

The electrode assembly is accommodated in a cell housing, and an electrolyte is injected to form a semi-finished battery cell. The semi-finished battery cell becomes a finished battery cell when electrical characteristics are allocated thereto by an activation process or the like. A plurality of manufactured finished battery cells may be grouped together to manufacture a battery module or a battery pack. As described above, various subsequent processes, such as the lamination and stacking process, the lamination and folding process, the ZZS process, the AZS process, a housing insertion process, an injection process, an activation process, a modularization process, and a pack process, may be performed to obtain finished products such as battery cells, battery modules, and a battery pack.

The present invention is characterized in which coordinate-related electrode identification (ID) data is collected by relating an electrode identifier (ID) allocated to one electrode sheet in the notching process to coordinates of a plurality of electrodes cut in the coupling process (e.g., the lamination process). Quality tracking of a process workpiece, an intermediate product, and a product may be performed by relating electrode ID data to process event data in a plurality of preceding processes before the coupling process and a plurality of subsequent processes after the coupling process. The electrode ID data includes an electrode ID and coordinate data corresponding to the electrode ID. By corresponding the coordinate data corresponding to the electrode ID to coordinates in a plurality of preceding processes, process event data in the preceding processes related to the coordinates may be related to the electrode ID data. In addition, an ID of a higher battery assembly including an electrode with the electrode ID may be related to the electrode ID data. The ID of the higher battery assembly is related to subsequent-process event data obtained in a plurality of subsequent processes, and thus the electrode ID data may be related to the subsequent-process event data.

An electrode sheet unwound from an electrode roll put into the coating device 100 (the coating process) may be processed by a die coater of the coating device 100, pressing rolls of the roll pressing device 200, or a slitting knife of the slitting device 300, and the processed electrode sheet may be wound around the electrode roll. Accordingly, processing performed by the coating device 100, the roll pressing device 200, and the slitting device 300 to produce electrodes may be referred to as a roll-to-roll process. An electrode roll put into the notching device 400 may be notched to form electrode tabs at intervals of a certain pitch and be wound again into an electrode roll after an electrode ID, which is an identification sign, is allocated thereto. Therefore, processing performed by the notching device 400 may also be referred to as a roll-to-roll process. The coupling device 500 (e.g., a lamination device 500) may laminate a first electrode sheet unwound from a first electrode roll (e.g., a negative electrode roll), a second electrode sheet unwound from a second electrode roll (e.g., a positive electrode roll), and separator sheets unwound from separator rolls together. Accordingly, processing performed by the lamination device 500 may also be referred to as a roll-to-roll process.

The coating device 100 may perform the coating process on the electrode sheet. In the coating process, an electrode sheet may be coated with an electrode slurry. The electrode slurry may include an active material, a conductive agent, a binder, and a solvent. The electrode slurry may be prepared by dissolving the active material, the conductive agent, the binder, etc., in the solvent.

The roll pressing device 200 may perform the roll pressing process on the electrode sheet. In the roll press process, the electrode sheet coated with the electrode slurry may be passed through between pressing rolls. Through the roll pressing process, a surface of the electrode sheet may be planarized, and a binding force between the active material of the electrode sheet and a current collector may be improved.

The slitting device 300 may perform the slitting process on the electrode sheet. The electrode sheet may be divided into a plurality of electrode sheets by the slitting process.

The EIF 1100 may be a device for communication between a server 1200 and controllers (e.g., process programmable logic controllers (PLCs)) of manufacturing equipment. A process PLC of the coating device 100, a process PLC of the roll pressing device 200, a process PLC of the slitting device 300, a process PLC 443 (see FIG. 2) of the notching device 400, and a process controller 540 (see FIG. 4) of the lamination device 500 may communicate with the server 1200 through the EIF 1100. Accordingly, data of process events generated by the coating device 100, the roll pressing device 200, the slitting device 300, the notching device 400, and the lamination device 500 may be transmitted to the server 1200.

Data of process events generated by controllers of various types of subsequent-process devices in a stacking process, a folding process, a housing insertion process, an injection process, an activation process, a modularization process, a pack, etc., may also be transmitted to the server 1200.

The server 1200 may store an electrode ID collected in the notching process, and a coordinate (a first coordinate to be describe below) indicating a position of an electrode sheet corresponding to the electrode ID in the notching process.

The server 1200 may also store coordinate-related electrode ID data collected in the lamination process.

The server 1200 may be configured to generate or store a roll map including data of a process event. Data of the roll map may include a value indicating the process event and a coordinate matching the value. The coordinate may indicate a position on an electrode. Accordingly, the roll map enables feedback, feedforward, and tracking of a battery manufacturing process, which will be described below.

Roll maps may be generated in units of lots. A lot is a production unit of a roll-to-roll process, and an electrode roll (or an electrode assembly roll) separated after a target winding length in each process is achieved is an example of a lot. Similarly, an electrode roll loaded on an unwinder in each process is an example of a lot. The server 1200 may generate or store a roll map in each of processes (e.g., a coating process, a roll pressing process, a slitting process, or a notching process).

In a roll map, time series data constructed over time (i.e., according to the progress of a process) may be related to coordinate data collected based on the amount of movement (i.e., an exhaustion amount or an input amount) of an electrode sheet.

The manufacture of a battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process may be referred to as feedforward.

Here, the workpiece may be an article provided as a result of each process, e.g., an electrode sheet on which the coating process, the roll press process, the slitting process, and the notching process are performed. The intermediate product may include separators, electrodes, or and assemblies thereof that are cut by the lamination process. The intermediate product may be a structure including a housing and an electrode assembly included in the housing (in some cases, the structure further includes an electrolyte). The product may be an article processed by the activation process to be operable as a battery. The above-described definitions of the workpiece, the intermediate product, and the product are definitions thereof only in one aspect, and thus should not be understood as excluding general definitions thereof.

Generally, process events occur as a result of performing a process, and thus data thereof is time series data. Accordingly, data of process events may include values indicating the events and time values matched thereto. Accordingly, the data of the process events may be time series data.

For feedforward, time series data should be related to positions on workpieces, components, intermediate products, and products of the real world. Here, the feedforward may include controlling processing of an electrode sheet, based on a roll map generated in a previous process. The roll map may allow time series data to be related with coordinate data including coordinates of the positions on the workpieces, the components, the intermediate products, and the products of the real world. The roll map may provide matching between time series data and the real-world workpieces, the components, the intermediate products, and the products, based on the coordinate data. Accordingly, feedforward based on generation of the roll map and the roll map may improve productivity and quality by digitizing and objectifying aspects of a process that depend on an operator's discretion.

A roll map of a preceding lot may be used to improve a process for a subsequent lot, and this behavior may be referred to as process feedback. The process feedback using the roll map may include identifying process conditions and process parameters that have caused problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include an electrode ID of an electrode included in an electrode assembly or a higher ID formed on the electrode assembly or a housing. The IDs may include lot numbers and coordinate information of electrodes and a separator included in the battery cell. In other words, the IDs may be related to a roll map of the electrodes and the separator included in the battery cell. Accordingly, when an event such as a quality issue occurs in a battery cell on the market, history data of manufacturing the battery cell may be retrieved based on the IDs.

According to example embodiments, the server 1200 may be a data processing system that supports all activities necessary to manage the manufacturing of batteries, such as work schedule management, work instructions, quality control, and work performance tally. The server 1200 serving as the data processing system may include, e.g., a manufacturing execution system (MES). The MES may be configured to perform inputting, processing, outputting, and communication of data necessary to manufacture electrodes, e.g., the coating process, a press process, and a manufacturing process.

According to other example embodiments, the server 1200 may be configured to store and process raw measurement data. The server 1200 may manage the quality of processing the electrode sheet by continuously monitoring the processing of the electrode sheet based on the measurement data. To this end, the server 1200 may include a statistical process controller (SP) that is a higher data processing system. The SPC may collect and analyze manufacturing data in real or almost real time to identify problem conditions in a timely manner and provide alarm to an operator before potential problems occur.

According to other example embodiments, the server 1200 may include, for example, a data warehouse that is a higher data processing system. The data warehouse may store a roll map for a long time, based on a quality guarantee period of a product or the like.

According to other example embodiments, the server 1200 may perform all functions of an MES, an SPC, and a data warehouse or be provided separately from the MES, the SPC, and the data warehouse to create a roll map.

The server 1200 may generate a visualization command to visualize a roll map. The server 1200 may transmit the visualization command to the display device 1300, and the display device 1300 may visualize and display the roll map.

FIG. 2 illustrates a notching device 400 according to example embodiments.

In the notching process, tabs may be formed on the electrode sheet, and a V-shaped groove may be formed to cut the electrode sheet as needed. In the notching process, a first electrode tab (e.g., a negative electrode tab TN) and a second electrode tab (e.g., a positive electrode tab TP) may be formed.

In the notching process, an electrode ID EID may be formed on first electrode tabs. The electrode ID EID may be formed by a method such as laser printing or ink printing. Accordingly, each of the first electrode tabs TN may include the electrode ID EID. Unlike the negative electrode tabs TN, the positive electrode tabs TP may not include the electrode ID EID to prevent a defect.

However, the present invention is not limited thereto, and the electrode ID EID may include symbols indicating sequence numbers of the negative electrode tabs TN. The symbols of the electrode ID EID may include Arabic numerals, but are not limited thereto. The symbols of the electrode ID EID may include arbitrary characters providing information about the sequence numbers of the negative electrode tabs TN. The electrode IDs EID may be barcode or QR code, for example.

The notching device 400 may include an unwinder 411, a rewinder 413, a notching machine 415, an inspection and/or measuring device 431, a first rotary encoder 421, a second rotary encoder 423, an ID marker 433, a first electrode ID reader 435, a roll map PLC 441, and the process PLC 443. The roll map PLC 441 and the process PLC 443 form a notching controller 440 of the notching device 400 together.

In the notching process, a first electrode sheet, e.g., a negative electrode sheet, may be notched, and a second electrode sheet (e.g., a positive electrode sheet) may be notched.

In the notching process, a first-electrode unwinding roll ER4 may be loaded on the unwinder 411. The first-electrode unwinding roll ER4 may be a slitting roll wound after a previous process, e.g., the slitting process. The unwinder 411 may be configured to unwind a first electrode sheet ES4 from the first-electrode unwinding roll ER4 in the notching process. The rewinder 413 may be configured to wind the first electrode sheet ES4, which is notched after being unwound by the unwinder 411, into a first-electrode winding roll ER5. The first electrode sheet ES4 may be wound into the first-electrode winding roll ER5 and be cut and separated after a certain winding length is reached. Accordingly, in the notching process, the first electrode sheet ES4 may be moved between the unwinder 411 and the rewinder 413.

The first rotary encoder 421 may be configured to sense an amount of the first electrode sheet ES4 unwound from the first-electrode unwinding roll ER4 by the unwinder 411. The first rotary encoder 421 may be configured as a contact type or a non-contact type. The first rotary encoder 421 may be configured to generate an unwinding amount (input amount) signal UWAS4 indicating a length of the first electrode sheet ES4 unwound by the unwinder 411. The first rotary encoder 421 may be configured to transmit the unwinding amount signal UWAS4 to the roll map PLC 441.

The second rotary encoder 423 may be configured to sense an amount of the first electrode sheet ES4 wound into the first-electrode winding roll ER5 by the rewinder 413. Accordingly, the second rotary encoder 423 may be configured to generate a winding amount (exhaustion amount) signal WAS4 indicating a length of the first electrode sheet ES4 wound by the rewinder 413. The second rotary encoder 423 may be configured to transmit the winding amount signal WAS4 to the roll map PLC 441.

The notching machine 415 may be a device configured to mechanically punch electrode tabs in a metal foil on which an electrode active material is formed to a substantially uniform thickness and width or to cut and remove a portion of the metal foil by laser. The notching machine 415 may be a device known in the technical field to which the present invention pertains. In some embodiments, the notching machine 415 may be a notching press device and include, for example, a driving part configured to move a notching mold up and down at regular intervals. The notching mold is moved downward to punch an edge of the first electrode sheet ES4 at intervals of a certain pitch to form an electrode tab (lead tab) of a certain shape (e.g., a rectangular shape).

After notching processing, the ID marker 433 may mark an electrode ID EID on each electrode tab. The ID marker 433 may be, for example, an inkjet type ink marker or a laser type laser marker, but is not limited thereto. An appropriate marker may be selected and used in a range in which high visibility is achieved and electrodes are not damaged.

The first electrode ID reader 435 may be configured to sense an electrode ID EID. The first electrode ID reader 435 may be configured to read a sequence number indicated by the electrode ID EID. The first electrode ID reader 435 may be, for example, a bar code reader (BCR), but is not limited thereto. For example, the first electrode ID reader 435 may be an optical character reader (OCR). The first electrode ID reader 435 may be configured to generate an electrode ID sensing signal EIDS, based on the sensing of the electrode ID EID. The first electrode ID reader 435 may be configured to transmit the electrode ID sensing signal EIDS to the notching controller 440.

Meanwhile, the ID marker 433 or the first electrode ID reader 435 may include a tab sensor and a trigger board to obtain sequence number (count) information of an electrode ID.

The tab sensor may identify a length, i.e., a pitch, of each electrode tab. The trigger board may increase a count value, based on the length of each electrode tab received from the tap sensor. The trigger board may convert a count value of the length of each electrode tab into a BCD code and transmit the BCD code to the ID marker 433, the first electrode ID reader 435, or the notching controller 440.

As described above, the ID marker 433 or the first electrode ID reader 435 may receive specification information (pitch information) of an electrode and obtain a count value (sequence number information) per pitch to mark or identify an electrode ID on an electrode tab of each pitch.

The inspection and/or measuring device 431 may be configured to inspect and/or measure the first electrode sheet ES4 to collect inspection and/or measurement data of the first electrode sheet ES4. The inspection and/or measuring device 431 may inspect and/or measure the first electrode sheet ES4 in a scanning manner. In some embodiments, the inspection and/or measuring device 431 may move in a width direction of the first electrode sheet ES4. The inspection and/or measuring device 431 may include a sensing part 431S and a processor 431P. The sensing part 431S may be configured to sense a physical quantity of the first electrode sheet ES4 to generate an inspection and/or measurement signal MS4. The sensing part 431S and the processor 431P may be connected by wire or wirelessly.

For example, the sensing part 431S may include an imaging device such as a time delay and integration (TDI) camera or a complementary metal oxide semiconductor (CMOS) image sensor. The sensing part 431S may be configured to generate an inspection signal IS indicating a surface of the first electrode sheet ES4. The sensing part 431S may be configured to transmit the inspection and/or measurement signal MS4 to the processor 431P. The inspection and or measurement signal MS4 may include, for example, an image of a surface of the first electrode sheet ES4.

The processor 431P may be configured to collect the inspection and/or measurement signal MS4 generated by the sensing part 431S to generate inspection and/or measurement data. The processor 431P may be configured to collect coordinate-related inspection and/or measurement data CMD4, based on the inspection and/or measurement signal MS4 and coordinate data CD4. The processor 431P may be configured to transmit the coordinate-related inspection and/or measurement data CMD4 to the roll map PLC 441.

The roll map PLC 441 may be configured to collect the coordinate data CD4 of the first electrode sheet ES4, based on winding amount data or unwinding amount data of the first electrode sheet ES4. For example, a moving distance of the first electrode sheet ES4 may be determined, and thus a position of a part of the first electrode sheet ES4 to be wound by the rewinder 413 at each point in time when the notching processing is performed may be determined.

The coordinate data CD4 may include a coordinate matching each part of the first electrode sheet ES4. That is, each of arbitrary points on the first electrode sheet ES4 may match a coordinate. The coordinate may be a one-dimensional quantity in a machine direction (e.g., longitudinal direction) of the first electrode sheet ES4, but is not limited thereto. For example, the coordinate may be a two-dimensional (2D) quantity in the machine direction and a Y-axis direction in a transverse direction of the first electrode sheet ES4.

The roll map PLC 441 may be in operative communication with the first and second rotary encoders 421 and 423, the inspection and/or measuring device 431, the ID marker 433, and the first electrode ID reader 435 through a wired or wireless data network. The data network may be unidirectional or bidirectional. The data network may be implemented by a physical channel, WiFi, public networks and/or specialized networks using Bluetooth or other frequency bands, for example. The first and second rotary encoders 421 and 423, the inspection and/or measuring device 431, the ID marker 433, and the first electrode ID reader 435 may be configured to collect data from equipment, a workpiece, an intermediate product, and a product in the notching device 400 or generate a signal for collecting data therefrom.

The roll map PLC 441 may be configured to transmit the coordinate data CD4 to the processor 431P. The processor 431P may be configured to relate the coordinate data CD4 to inspection and/or measurement data to generate the coordinate-related inspection and/or measurement data CMD4. In general, the inspection and/or measurement data may be processed based on a trigger point. Examples of processing the inspection and/or measurement data may include storing and modifying the inspection and/or measurement data (e.g., to generate the coordinate-related inspection and/or measurement data CMD4), and transmitting the inspection and/or measurement data.

As a non-limiting example, a trigger point for processing the inspection and/or measurement data may be the completion of scanning. For example, the sensing part 431S may scan a sheet material in a width direction of the first electrode sheet ES4, and the inspection and/or measurement data may be stored, processed, modified, and transmitted whenever scanning is performed. As another example, the trigger point may be completion of performing scanning multiple times or partial completion of scanning.

The coordinate-related inspection and/or measurement data CMD4 transmitted to the roll map PLC 441 may be transmitted to the server 1200 via the process PLC 443. Although not shown in FIG. 2, the coordinate-related inspection and/or measurement data CMD4 may be transmitted from the process PLC 443 to the server 1200 via the EIF 1100 (see FIG. 1).

The process PLC 443 and the EIF 1100 may relay communication of data, including the coordinate-related inspection and/or measurement data CMD4, between the server 1200 and the roll map PLC 441. However, embodiments are not limited thereto, and the roll map PLC 441 may directly transmit the coordinate-related inspection and/or measurement data CMD4 to the server 1200.

The process PLC 443 may be configured to control operations of the unwinder 411, the rewinder 413, the notching machine 415, the ID marker 433, and the first electrode ID reader 435. The process PLC 443 may be configured to generate a signal for operating or stopping the unwinder 411, the rewinder 413, and the notching machine 415. The process PLC 443 may be configured to generate a signal for operating or stopping the unwinder 411, the rewinder 413, the notching machine 415, the ID marker 433, and the first electrode ID reader 435. The signal may be generated based on a body containing a product ID and details of a manufacturing recipe.

The notching controller 440 may be configured to collect coordinate-related electrode ID data that includes the electrode ID EID and a first coordinate of a position of the first electrode sheet ES4 matching the electrode ID EID in the notching process. The first coordinate may be obtained based on an unwinding amount signal and/or a winding amount of the first electrode sheet ES4 when the electrode ID EID is sensed in the notching process.

The first electrode ID reader 435 may be configured to generate an electrode ID sensing signal EIDS, based on the sensing of the electrode ID EID. The first electrode ID reader 435 may be configured to transmit the electrode ID sensing signal EIDS to the notching controller 440.

Specifically, the first electrode ID reader 435 sense a certain electrode ID on the first electrode sheet ES4 and transmits the electrode ID sensing signal EIDS to the roll map PLC 441 of the notching controller 440. The roll map PLC 441 may collect a coordinate (a first coordinate) of a part of the first electrode sheet ES4 corresponding to the electrode ID EID from the unwinding amount signal UWAS4 or the winding amount signal WAS4 of the first electrode sheet ES4 at a point in time when the electrode ID sensing signal EIDS is sensed. That is, in the notching process, the notching controller 440 may collect the coordinate-related electrode ID data EIDD1 that includes the electrode ID EID and the first coordinate matching the electrode ID EID. Coordinate-related electrode ID data in the notching process and coordinate-related electrode ID data in the lamination process to be described below may be respectively referred to as first coordinate-related electrode ID data EIDD1 and second coordinate-related electrode ID data EIDD2 to distinguish them from each other. The first coordinate-related electrode ID data EIDD1 may include an electrode ID and a first coordinate.

According to an example embodiment, a position of the first electrode sheet ES4 at a point in time when the first electrode ID reader 435 senses an electrode ID may be different from a position of the first electrode sheet ES4 based on data of an amount of unwinding sensed by the first rotary encoder 421 or data of an amount of winding sensed by the second rotary encoder 423.

According to example embodiments, the first coordinate may be a value calculated by subtracting an offset distance from the unwinder 411 to the first electrode ID reader 435 from a coordinate of the first electrode sheet ES4 based on data of an amount of unwinding sensed by the first rotary encoder 421 at the point in time when the electrode ID is sensed.

Alternatively, according to example embodiments, the first coordinate may be a value calculated by adding an offset distance from the rewinder 413 to the first electrode ID reader 435 to a coordinate of the first electrode sheet ES4 based on data of an amount of winding sensed by the second rotary encoder 423 at the point in time when the electrode ID is sensed.

The first coordinate may be a start or end coordinate of a part of the first electrode sheet ES4, which includes an electrode tab on which the electrode ID EID is marked, of a certain pitch, or a coordinate of the electrode tab. Alternatively, the first coordinate may include at least two among the start coordinate and the end coordinate of the part of the first electrode sheet ES4, which includes the electrode tab on which the electrode ID EID is marked, of a certain pitch, and the coordinate of the electrode tab.

The first coordinate-related electrode ID data EIDD1 including the first coordinate and the electrode ID matching the first coordinate is transmitted from the roll map PLC 441 to the server 1200 via the process PLC 443.

For control of processes, a communication line may be installed between the process PLC 443 and the server 1200 via the EIF 1100 to connect the process PLC 443 and a first server 1210. Accordingly, data transmission through the process PLC 443 may reduce resources required for the installation of the communication line and ensure efficient data processing and management, compared to a case in which the first and second rotary encoders 421 and 423 and the inspection and/or measuring device 431 directly transmit the unwinding amount signal UWAS4, the winding amount signal WAS4, and the inspection and/or measurement signal MS4 to the first server 1210 and a case in which the roll map PLC 441 directly transmits various types of data to the first server 1210.

The server 1200 may include the first server 1210, a second server 1220, and a third server 1230.

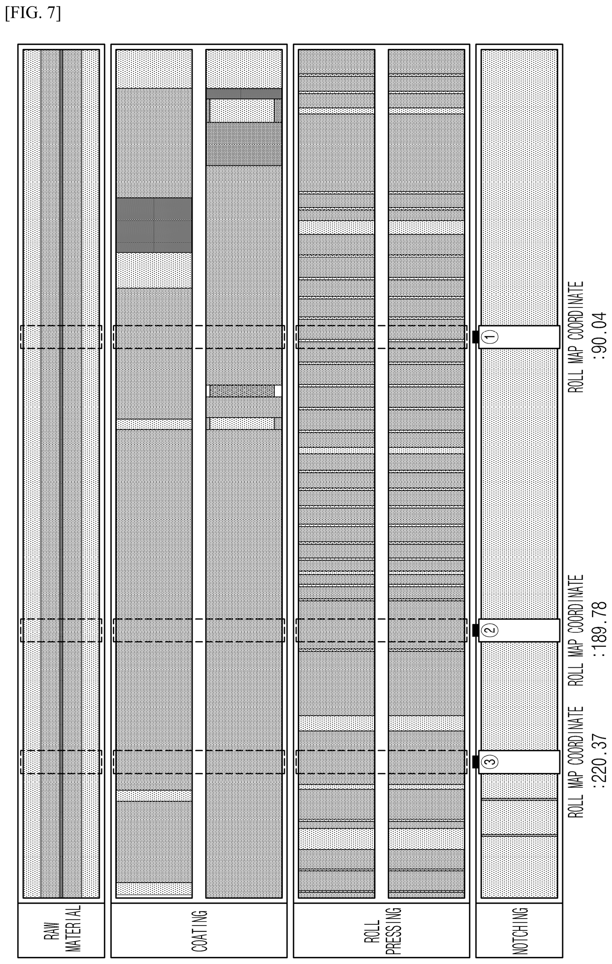

The first server 1210 may be configured to generate a roll map in the notching process. In addition, the first server 1210 may generate roll maps in preceding processes before the notching process, such as the coating process, the roll pressing process, and the slitting process (see FIG. 7).

Roll maps may be generated in units of lots formed by winding and cutting a sheet material. A roll map may include data about specifications of a lot. The specifications of the lot may include, for example, a lot number, a length of a wound sheet material, a width of the sheet material, materials used to process the sheet material, and a composition of the materials. The first server 1210 may be configured to generate a roll map of the first-electrode winding roll ER5 obtained by winding the notched first electrode sheet ES4, based on the coordinate-related inspection and/or measurement data CMD4 transmitted from the process PLC 443 and additional process event data. Process event data and coordinates matched thereto may be displayed on the roll map.

According to example embodiments, the first server 1210 may be a data processing system that supports all activities required to manage the manufacture of a secondary battery, such as work schedule management, work instructions, quality control, and work performance aggregation. The first server 1210 may be, for example, a manufacturing execution system (MES). The first server 1210 may be configured to perform inputting, processing, outputting, and communication of data necessary for the manufacture of electrodes, including the coating process, the roll pressing process, the slitting process, and the notching process.

The first server 1210 may generate a visualization command to visualize a roll map. The first server 1210 may transmit the visualization command to a display device, and the display device may visualize and display the roll map as shown in FIG. 7.

The first coordinate-related electrode ID data EIDD1 may be transmitted to the first server 1210 from the notching controller 440. The first coordinate-related electrode ID data EIDD1 includes the electrode ID EID and the first coordinate related to the electrode ID EID. Therefore, by detecting a coordinate of an actual electrode sheet corresponding to the first coordinate and matching the coordinate to the first coordinate in a preceding process before the notching process, a coordinate of a part of the electrode sheet, which corresponds to the electrode ID EID in the notching process, in the preceding process may be matched to the electrode ID EID. In addition, as shown in FIG. 7, roll maps in preceding processes include various process event data of the preceding processes and roll map coordinates. Therefore, by matching the first coordinate and the roll map coordinates, for example, process event data of a preceding process with a quality-related issue may be retrieved using information of a roll map of a preceding process corresponding to a specific electrode ID.

In addition, as will be described below, pieces of data may be connected or tracked in almost all processes of the manufacture of a battery by matching the first coordinate-related electrode ID data EIDD1 to the second coordinate-related electrode ID data EIDD2 in the lamination process and an ID of a higher battery assembly in a subsequent process.

The second server 1220 may be configured to store and process the coordinate-related inspection and/or measurement data CMD4 and the first coordinate-related electrode ID data EIDD1. The second server 1220 may manage the quality of processing a sheet material by continuously monitoring the processing of the sheet material based on the stored data. According to example embodiments, the second server 1220 may be a statical process controller (SPC). The second server 1220 may collect and analyze manufacturing data in real or almost real time to identify problematic conditions in a timely manner and provide a notification to an operator before potential problems occur.

The third server 1230 may be configured to store the coordinate-related measurement data CMD4 and the first coordinate-related electrode ID data EIDD1 transmitted from the second server 1220. When the first server 1210 is a manufacturing execution system (MES) and the second server 1220 is a statical process controller (SPC), they may be unsuitable to store related data for a long time. The third server 1230 may be, for example, a data warehouse and store the coordinate-related measurement data CMD4 and the first coordinate-related electrode ID data EIDD1 for a long time, based on a quality guarantee period of a product or the like.

Referring to FIGS. 3 to 6, the lamination device 500 may include a positive electrode unwinder 511P, a negative electrode unwinder 511N, separator unwinders 511S1 and 511S2, electrode cutters 513P and 513N, guide rolls 515, a separator cutter 517, rotary encoders 521P and 521N, joint sensors 523P and 523N, an electrode gap sensor 525, a second electrode ID reader 527, a controller 540, and servers 1210, 1220, and 1230.

The lamination device 500 may be configured to perform, for example, a lamination and stacking process. Mono-cells MC may be provided as a result of the lamination process. Each of the mono-cells MC may include a positive electrode EPP, a negative electrode EPN, and separators. In the stacking process, the mono-cells MC and additional half-cells may be stacked in a vertical direction to provide an electrode assembly.

The lamination process is a process subsequent to the notching process. Therefore, the first-electrode winding roll ER5 and a second-electrode winding roll completed in the notching process are loaded on an unwinder in the lamination process. In this case, the electrode sheet provided with the electrode ID EID on the electrode tab by marking an ID in the notching process is a first electrode sheet. In the present embodiment, the electrode ID EID is allocated to a negative electrode tab in the notching process, and thus a negative electrode sheet and a negative electrode are a first electrode sheet and a first electrode in the lamination process. A positive electrode sheet is notching processed in the notching process, and thus includes a positive electrode tab, but an electrode ID is not allocated to the positive electrode sheet, and thus the positive electrode sheet and a positive electrode are a second electrode sheet and a second electrode in the lamination process. On the contrary, when an electrode ID is allocated to a positive electrode tab and is not allocated to a negative electrode tab in the notching process, a positive electrode sheet and a positive electrode are a first electrode sheet and a first electrode and a negative electrode sheet and a negative electrode are a second electrode sheet and a second electrode in the lamination process.

The unwinders 511P, 511N, 511S1, and 511S2 may be configured to put roll type materials into the lamination device 500. More specifically, the unwinder 511P may be configured to unwind a positive electrode sheet ESP from a positive electrode roll ERP, the unwinder 511N may be configured to unwind a negative electrode sheet ESN from a negative electrode roll ERN, and the separator unwinders 511S1 and 511S2 may be configured to unwind separator sheets SS1 and SS2 from separator rolls SR1 and SR2.

The positive electrode roll ERP and the negative electrode roll ERN may be provided through a series of battery manufacturing processes. For example, the positive electrode roll ERP and the negative electrode roll ERN may be provided by the coating process, the roll pressing process, a selective slitting process, and the notching process.

The coating process and the roll press process are performed on a wide electrode sheet to enhance the production (e.g., GWh) per line of battery production equipment. Thereafter, in the slitting process, the wide electrode sheet may be cut according to the specifications of a battery cell. The slitting process may be omitted according to the specifications of the battery cell.

The positive electrode cutter 513P may be configured to cut the positive electrode sheet ESP. A plurality of positive electrodes EPP may be provided by cutting the positive electrode sheet ESP. The negative electrode cutter 513N may be configured to cut the negative electrode sheet ESN. A plurality of negative electrodes EPN may be provided by cutting the negative electrode sheet ESN.

The controller 540 may control operations of the positive electrode cutter 513P and the negative electrode cutter 513N as will be described below, and thus may be configured to count cuts of the positive electrode sheet ESP by the positive electrode cutter 513P and cuts of the negative electrode sheet ESN by the negative electrode cutter 513N. For example, the controller 540 may be configured to receive a first cut count signal CCSN from the negative electrode cutter 513N and a second cut count signal CCSP from the positive electrode cutter 513P.

The guide rolls 515 may be configured to define a path of the separator sheets SS1 and SS2. The separator sheets SS1 and SS2 may be aligned side by side by the guide rolls 515. The positive electrodes EPP and the negative electrodes EPN may be on the separator sheets SS1 and SS2, respectively. For example, the negative electrodes EPN may be on the separator sheet SS2, and the positive electrodes EPP may be on the separator sheet SS1. The positive electrodes EPP and the negative electrodes EPN may be electrically and physically separated by the separator sheet SS1.

The separator cutter 517 may be configured to cut the separator sheets SS1 and SS2. Before the separator sheets SS1 and SS2 are cut by the separator cutter 517, a stacked structure of the separator sheets SS1 and SS2, the positive electrodes EPP, and the negative electrodes EPN may be pressurized by a nip roll (not shown) or the like. By cutting the separator sheets SS1 and SS2, a mono-cell MC including the positive electrodes EPP, the negative electrodes EPN, and separators may be provided.

The first rotary encoder 521N may be configured to sense an amount of rotation of the unwinder 511N. The first rotary encoder 521N may be configured to sense an amount of the negative electrode sheet ESN unwound from the negative electrode roll ERN by the unwinder 511N. Accordingly, the first rotary encoder 521N may be configured to generate a first input amount signal UWSN indicating a length of the negative electrode sheet ESN unwound by the unwinder 511N (i.e., an input amount of the negative electrode sheet ESN). The first rotary encoder 521N may be configured to transmit the first input amount signal UWSN to the controller 540.

The second rotary encoder 521P may be configured to sense an amount of rotation of the unwinder 511P. The second rotary encoder 521P may be configured to sense an amount of the positive electrode sheet ESP unwound from the positive electrode roll ERP by the unwinder 511P. Accordingly, the second rotary encoder 521P may be configured to generate a second input amount signal UWSP indicating a length of the positive electrode sheet ESP unwound by the unwinder 511P (i.e., an input amount of the positive electrode sheet ESP). The second rotary encoder 521P may be configured to transmit the second input amount signal UWSP to the controller 540.

The first joint sensor 523N may be configured to sense a joint of the negative electrode sheet ESN. Here, the negative electrode sheet ESN may include a joint when the negative electrode roll ERN is replaced with another (i.e., when a subsequent negative electrode roll ERN is loaded on the unwinder 511N), when an electrode is broken in a current process (i.e., during processing of the negative electrode sheet ESN by the lamination device 500), or when the electrode was broken in a previous process (i.e., during processing of the negative electrode roll ERN before being loaded on the unwinder 511N).

The first joint sensor 523N may be, for example, a color sensor, but is not limited thereto. The first joint sensor 523N may be configured to generate a first joint sensing signal JSSN. The first joint sensing signal JSSN may be transmitted to the controller 540.

The second joint sensor 523P may be configured to sense a joint of the positive electrode sheet ESP. Here, the positive electrode sheet ESP may include a joint when the positive electrode roll ERP is replaced with another (i.e., when a subsequent positive electrode roll ERP is loaded on the unwinder 511P), when an electrode is broken in a current process (i.e., during processing of the positive electrode sheet ESP by the lamination device 500), or when the electrode was broken in a previous process (i.e., during processing of the positive electrode roll ERP before being loaded on the unwinder 511P).

The second joint sensor 523P may be, for example, a color sensor, but is not limited thereto. The second joint sensor 523P may be configured to generate a second joint sensing signal JSSP. The second joint sensing signal JSSP may be transmitted to the controller 540.

The electrode gap sensor 525 may be configured to sense gaps between positive electrodes EPP and negative electrodes EPN. For example, the electrode gap sensor 525 may be configured to sense gaps between the positive electrodes EPP. As another example, the electrode gap sensor 525 may be configured to sense gaps between the negative electrodes EPN. As another example, the electrode gap sensor 525 may be configured to sense gaps between the positive electrodes EPP and gaps between the negative electrodes EPN.

The electrode gap sensor 525 may be configured to generate a gap sensing signal ISS. The electrode gap sensor 525 may be configured to transmit the gap sensing signal ISS to the controller 540.

The second electrode ID reader 527 may be configured to sense an electrode ID EID. The second electrode ID reader 527 may be configured to read a sequence number indicated by the electrode ID EID. The second electrode ID reader 527 may be, for example, a bar code reader (BCR), but is not limited thereto. The second electrode ID reader 527 may be an optical character reader (OCR). The second electrode ID reader 527 may be configured to generate an electrode ID sensing signal EIDS based on the sensing of the electrode ID EID. The second electrode ID reader 527 may be configured to transmit the electrode ID sensing signal EIDS to the controller 540.

The controller 540 may be configured to control elements of the lamination device 500, e.g., the unwinders 511P, 511N, 511S1, and 511S2, the positive electrode cutter 513P, the negative electrode cutter 513N, and the separator cutter 517.

The controller 540 may be in operative communication with the rotary encoders 521P and 521N, the joint sensors 523P and 523N, the electrode gap sensor 525, and the second electrode ID reader 527 through a wired or wireless data network. The data network may be unidirectional or bidirectional. The rotary encoders 521P and 521N, the joint sensors 523P and 523N, the electrode gap sensor 525, and the second electrode ID reader 527 may be configured to collect data from equipment, a workpiece, an intermediate product, and a product in the lamination device 500 or generate a signal for collecting data therefrom.

As a non-limiting example, the controller 540 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC.

The controller 540 may include a power supply, a CPU, an input interface, an output interface, a communication interface, and memory devices. For an operation of the controller 540, power may be supplied to other elements of the controller 540, such as the CPU, the input interface, the output interface, the communication interface, and the memory devices. The communication interface may be configured to transmit and receive data between the controller 540 and the server 1200.

However, embodiments are not limited thereto, and the controller 540 may include one of a simple controller, a complex processor such as a microprocessor, a CPU or a GPU, a processor configured by software, dedicated hardware, and firmware.

Cutting may be performed by the positive electrode cutter 513P and the negative electrode cutter 513N, based on a pitch that is a regular repetition unit. The pitch may be a minimum unit length by which the same shape or structure is repeated, such as a machine-direction length between positive electrode tabs TP of neighboring positive electrodes EEP. Because the positive electrode sheet ESP is cut to substantially the same target length, an input amount of the positive electrode sheet ESP may be proportional to a cut count (e.g., a cut count signal CCSP) from the positive electrode cutter 513P. Likewise, because the negative electrode sheet ESN is cut to substantially the same target length, an input amount of the negative electrode sheet ESN may be proportional to a cut count (e.g., a cut count signal CCSN) from the negative electrode cutter 513N.

More specifically, as shown in Equation 1, the input amount of the positive electrode sheet ESP may be the sum of the product of a cut count Cutcount_P and a pitch Pitch_P and an offset length OLP2. Here, the offset length OLP2 may be a length of the positive electrode sheet ESP between the unwinder 511P and the positive electrode cutter 513P.

[Equation 1]

$$\text{Input amount\_P} = \text{OLP2} + (\text{Pitch\_P}) \times (\text{Cutcount\_P})$$

Similarly, as shown in Equation 2, the input amount of the negative electrode sheet ESN may be the sum of the product of a cut count Cutcount_N and a pitch Pitch_N and an offset length OLN2. Here, the offset length OLN2 may be a length of the negative electrode sheet ESN between the unwinder 511N and the negative electrode cutter 513N.

[Equation 2]

$$\text{Input amount\_N} = \text{OLN2} + (\text{Pitch\_N}) \times (\text{Cutcount\_N})$$

As another example, the input amount of the negative electrode sheet ESN may be determined from the first input amount signal UWSN from the first rotary encoder 521N, and the input amount of the positive electrode sheet ESP may be determined from the second input amount signal UWSP from the second rotary encoder 521P.

The input amount of the positive electrode sheet ESP may indicate a relative position of a part of the positive electrode sheet ESP, which is unwound by the unwinder 511P, on the positive electrode sheet ESP. A controller may be configured to determine a coordinate of an event occurring on the positive electrode sheet ESP based on the input amount of the positive electrode sheet ESP and offset lengths OLP1, OLP2, and OLP3. The controller may be configured to determine a coordinate of an event occurring on the negative electrode sheet ESN based on an input amount of the negative electrode sheet ESN and offset lengths OLN1, OLN2, and OLN3.

For example, a coordinate of a part of the positive electrode sheet ESP sensed by the second joint sensor 523P (i.e., a coordinate on the positive electrode sheet ESP derived from the second joint sensing signal JSSP) may be determined by performing an arithmetic operation (e.g., addition or subtraction) on the input amount of the positive electrode sheet ESP and the offset length OLP1. The offset length OLP1 may be a length of the positive electrode sheet ESP between the unwinder 511P and a part of the positive electrode sheet ESP sensed by the second joint sensor 523P.

For example, a coordinate of a part of the positive electrode sheet ESP cut by the positive electrode cutter 513P may be determined by performing an arithmetic operation (e.g., addition or subtraction) on the input amount of the positive electrode sheet ESP and the offset length OLP2. The offset length OLP2 may be a length of the positive electrode sheet ESP between the unwinder 511P and a part of the positive electrode sheet ESP cut by the positive electrode cutter 513P.

For example, a coordinate (e.g., a conversion coordinate or an equivalent coordinate) of a positive electrode EPP coupled to a negative electrode EPN sensed by the second electrode ID reader 527 may be determined by performing an arithmetic operation (e.g., addition or subtraction) on the input amount of the positive electrode sheet ESP and the offset length OLP3. The offset length OLP3 may be a length (e.g., a conversion length or equivalent length) of the positive electrode sheet ESP between the unwinder 511P and the positive electrode EPP coupled to the negative electrode EPN sensed by the second electrode ID reader 527.

In this case, there are positive electrodes EPP between the positive electrode cutter 513P and the second electrode ID reader 527 rather than the positive electrode sheet ESP. Therefore, the offset length OLP3 may not be a length of an actual positive electrode sheet ESP but may be an equivalent length calculated based on a cut count of the positive electrode cutter 513P or determined from the second input amount signal UWSP.

The input amount of the negative electrode sheet ESN may indicate a relative position of a part of the negative electrode sheet ESN, which is unwound by the unwinder 511N, on the negative electrode sheet ESN. A coordinate of an event occurring on the negative electrode sheet ESN may be determined based on an input amount of the negative electrode sheet ESN.

For example, a coordinate of a part of the negative electrode sheet ESN sensed by the first joint sensor 523N (i.e., a coordinate on the negative electrode sheet ESN derived from the first joint sensing signal JSSN) may be determined by performing an arithmetic operation (e.g., addition or subtraction) on the input amount of the negative electrode sheet ESN and the offset length OLN1. The offset length OLN1 may be a length of the negative electrode sheet ESN between the unwinder 511N and a part of the negative electrode sheet ESN sensed by the first joint sensor 523N.

For example, a coordinate of a part of the negative electrode sheet ESN cut by the negative electrode cutter 513N may be determined by performing an arithmetic operation (e.g., addition or subtraction) on the input amount of the negative electrode sheet ESN and the offset length OLN2. The offset length OLN2 may be a length of the negative electrode sheet ESN between the unwinder 511N and a part of the negative electrode sheet ESN cut by the negative electrode cutter 513N.

For example, a coordinate (e.g., a conversion coordinate or an equivalent coordinate) of a negative electrode EPN sensed by the second electrode ID reader 527 may be determined by performing an arithmetic operation (e.g., addition or subtraction) on the input amount of the negative electrode sheet ESN and the offset length OLN3. The offset length OLN3 may be a length (e.g., a conversion length or equivalent length) of the negative electrode sheet ESN between the unwinder 511N and the negative electrode EPN sensed by the second electrode ID reader 527.

In this case, there are negative electrodes EPN between the negative electrode cutter 513N and the second electrode ID reader 527 rather than the negative electrode sheet ESN. Therefore, the offset length OLN3 may not be the length of an actual negative electrode sheet ESN, but may be an equivalent length calculated based on a cut count of the negative electrode cutter 513N or determined from the first input amount signal UWSN.

Coordinates on the positive electrode sheet ESP may match parts of the positive electrode sheet ESP. That is, arbitrary points on the positive electrode sheet ESP may have coordinates. The coordinates may be 1D quantities in the machine direction MD (or the longitudinal direction) of the sheet material SM, but are not limited thereto. For example, the coordinates may be 2D quantities in the machine direction MD and a transverse direction (or a width direction) of the positive electrode sheet ESP.

Coordinates on the negative electrode sheet ESN may match parts of the negative electrode sheet ESN. That is, arbitrary points on the negative electrode sheet ESN may have coordinates. The coordinates may be 1D quantities in the machine direction MD (or the longitudinal direction) of the sheet material SM, but are not limited thereto. The coordinates may be 2D quantities in the machine direction MD and a transverse direction (or a width direction) of the negative electrode sheet ESN.

The controller 540 may be configured to collect the second coordinate-related electrode ID data EIDD2 based on the electrode ID sensing signal EIDS, the input amount of the positive electrode sheet ESP, and the input amount of the negative electrode sheet ESN. As described above, the input amount of the negative electrode sheet ESN may be calculated based on a cut count of the negative electrode cutter 513N or be determined by the first input amount signal UWSN.

As described above, the input amount of the positive electrode sheet ESP may be calculated based on a cut count of the positive electrode cutter 513P or be determined by the second input amount signal UWSP.

According to example embodiments, the controller 540 may be configured to determine a coordinate of the negative electrode EPN sensed by the second electrode ID reader 527 by performing an arithmetic operation on the input amount of the negative electrode sheet ESN and the offset length OLN3. The controller 540 may be configured to match the coordinate of the negative electrode EPN sensed by the second electrode ID reader 527 to the electrode ID sensing signal EIDS.

According to example embodiments, the controller 540 may be configured to determine a coordinate of the positive electrode EPP coupled to the negative electrode EPN sensed by the second electrode ID reader 527 by performing an arithmetic operation on the input amount of the positive electrode sheet ESP and the offset length OLP3. The controller 540 may be configured to match the coordinate of the positive electrode EPP coupled to the negative electrode EPN sensed by the second electrode ID reader 527 to the electrode ID sensing signal EIDS.

Here, the coordinate of the negative electrode EPN may be a start or end coordinate of the negative electrode EPN or a coordinate of a negative electrode tab TN. The coordinate of the negative electrode EPN may include at least two among the start and end coordinates of the negative electrode EPN and the coordinate of the negative electrode tab TN. A coordinate of the positive electrode EPP may be a start or end coordinate of the positive electrode EPP or a coordinate of a part of the positive electrode EPP overlapping the negative electrode tab TN. The coordinate of the positive electrode EPP may include at least two among the start and end coordinates of the positive electrode EPP and the coordinate of the part of the positive electrode EPP overlapping the negative electrode tab TN.

To match the electrode ID EID to the coordinate of the positive electrode sheet ESP and the coordinate of the negative electrode sheet ESN, a lot number of the positive electrode roll ERP from which the positive electrode sheet ESP is unwound, and a lot number of the negative electrode roll ERN from which the negative electrode sheet ESN is unwound should be determined. The second joint sensing signal JSSP and the first joint sensing signal JSSN may be used to identify a lot. According to example embodiments, the controller 540 may update lot numbers of the positive electrode roll ERP and the negative electrode roll ERN, based on the second joint sensing signal JSSP and the first joint sensing signal JSSN. Accordingly, the coordinate of the negative electrode sheet ESN and the coordinate of the positive electrode sheet ESP may be reset based on the second joint sensing signal JSSP and the first joint sensing signal JSSN.

The offset length OLP1 and the offset length OLN1 may be used to update the lot numbers and reset the coordinate of the negative electrode sheet ESN and the coordinate of the positive electrode sheet ESP. Here, the offset length OLP1 may be a length of the positive electrode sheet ESP between the unwinder 511P and the second joint sensor 523P. Here, the offset length OLN1 may be a length of the negative electrode sheet ESN between the unwinder 511N and the first joint sensor 523N.

More specifically, when a new positive electrode roll ERP is loaded on the unwinder 511P, the new positive electrode roll ERP should be connected to a remaining positive electrode sheet ESP of a previous lot using joints to continue the roll-to-roll process. For example, it may be determined that a part of a positive electrode sheet ESP following a joint of a positive electrode sheet ESP sensed first after loading a positive electrode roll ERP of a new lot on the unwinder 511P has been unwound from the newly loaded positive electrode roll ERP. Accordingly, when the second joint sensing signal JSSP is generated after the loading of the new positive electrode roll ERP, the controller 540 may be configured to match the electrode ID EID to a coordinate of a positive electrode sheet ESP of a subsequent lot. An electrode ID EID of each of negative electrodes EPN coupled to positive electrodes EPP may be allocated to another lot, based on the loading of the positive electrode roll ERP and the sensing of a joint.

Similarly, when a new negative electrode roll ERN is loaded on the unwinder 511N, the new negative electrode roll ERN should be connected to a remaining negative electrode sheet ESN of a previous lot using joints to continue the roll-to-roll process. For example, it may be determined that a part of a negative electrode sheet ESN following a joint of a negative electrode sheet ESN sensed first after loading a negative electrode roll ERN of a new lot on the unwinder 511N has been unwound from the newly loaded negative electrode roll ERN. Accordingly, when the first joint sensing signal JSSN is generated after the loading of the new negative electrode roll ERN, the controller 540 may be configured to match the electrode ID EID to a coordinate of a negative electrode sheet ESN of a subsequent lot. The electrode ID EID of each of the negative electrodes EPN may be allocated to another lot based on the loading of the negative electrode roll ERN and the sensing of a joint.

The second coordinate-related electrode ID data EIDD2 may include the electrode ID EID of the negative electrode EPN, and at least one of the coordinate of the positive electrode sheet ESP matching the electrode ID EID of the negative electrode EPN and the coordinate of the negative electrode sheet ESN.

The first server 1210 may be configured to relay communication between the controller 540 and the second server 1220. The first server 1210 may be configured to convert data collected by the controller 540, e.g., the second coordinate-related electrode ID data EIDD2, into a language of the server 1200 and record the converted data in a database of the second server 1220.

The second server 1220 may be configured to store or process the second coordinate-related electrode ID data EIDD2. The second server 1220 may be configured to transmit the second coordinate-related electrode ID data EIDD2 to the third server 1230. The third server 1230 may be, for example, a data warehouse, and store the second coordinate-related electrode ID data EIDDs for a long time based on a quality guarantee period of a product or the like. Accordingly, a manufacturing process of the product may be tracked according to a life cycle of the product.

Furthermore, the third server 1230 may provide matching between the electrode ID EID, and roll maps of a preceding process of the positive electrode roll ERP and roll maps of a preceding process (e.g., an electrode process) of the negative electrode roll ERN. The third server 1230 is a data warehouse, and thus may include history data (i.e., roll maps) of the manufacture of the positive electrode roll ERP and history data (i.e., roll maps) of the manufacture of the negative electrode roll ERN.

Here, the roll maps may represent a process event of the positive electrode sheet ESP and the negative electrode sheet ESN, based on roll map coordinates of positions on the positive electrode sheet ESP and the negative electrode sheet ESN.

The roll maps may include event data indicating events of the roll-to-roll process of the electrode sheets ESP and ESN. Generally, the event data is generated according to the progress of a process, and thus is time series data. Accordingly, data of process events may include values indicating the events and time values matched thereto. The time series data may be temporally ordered. Temporal ordering is a main feature of time series data and should be understood as organizing events in an order in which they occur and arrive to be processed. That is, the time series data may be stored based on a point in time when an event occurs (i.e., when inspection and measurement are performed or when an action of a process is performed), and the event may be matched to time values.

The roll maps may indicate a history of processes performed on the positive electrode sheet ESP and the negative electrode sheet ESN and include data related to coordinates. Accordingly, the roll map enables feedback, feedforward, and tracking of a battery manufacturing process.

The mono-cells MC may include the electrode ID EID on the negative electrode tabs TN, and the second server 1220 may include lot numbers of and coordinates on the positive electrodes and the negative electrodes that are included in the mono-cells MC matching the electrode ID EID. In other words, the positive electrodes EPP and the negative electrodes EPN that are included in the battery cell may be related to a roll map using the electrode ID EID. Accordingly, when an event such as a quality issue occurs in already shipped mono-cells MC (or a battery cell including the mono-cells MC), the history of collective data of the manufacture of the mono-cells MC may be retrieved based on an electrode ID.

According to some embodiments, operations of the servers 1210, 1220 and 1230 may be implemented by instructions stored in a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The servers 1210, 1220 and 1230 may include firmware, software, routines, and instructions for performing the above-described operation, or a process described below. For example, the servers 1210, 1220 and 1230 may be instantiated in a memory.

However, the instantiation of the servers 1210, 1220 and 1230 in the memory is only an example provided for convenience of description, and the operations of the servers 1210, 1220 and 1230 may be caused by a computing device, distributed computing devices, a processor, or other types of devices for execution of firmware, software, routines, and instructions.

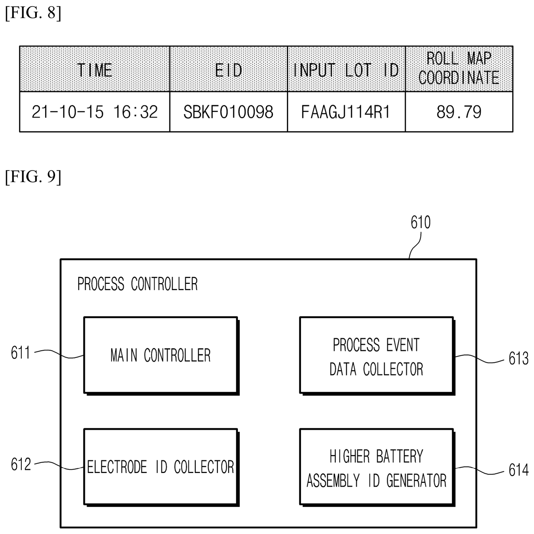

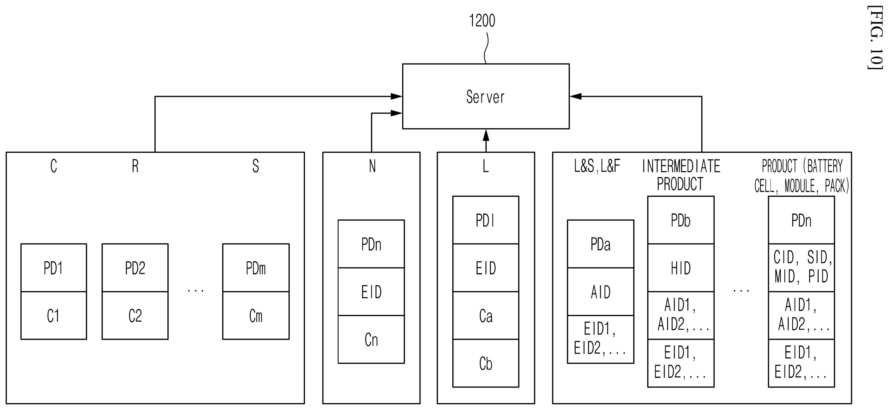

FIG. 7 illustrates roll maps generated in a plurality of preceding processes before lamination, and FIG. 8 illustrates data matching roll map coordinates. FIG. 10 illustrates matching of data of a battery manufacturing system according to example embodiments.

Referring to FIG. 7, a roll map in the coating process, a roll map in the roll pressing process, and a roll map in the notching process are arranged side by side in a longitudinal direction of an electrode sheet which is a raw material. FIG. 7 illustrates a case in which opposite surfaces of an electrode sheet are coated with an electrode slurry and are roll pressed, and the roll map in the coating process and the roll map in the roll pressing process are prepared for an upper surface and a lower surface of the electrode sheet, respectively. In some cases, the slitting process may be performed between the roll pressing process and the notching process. Although not shown, in the slitting process, roll maps of opposite surfaces of the electrode sheet may also be prepared similar to those of FIG. 7. However, in the notching process, only notching is performed on upper and lower surfaces of an electrode without performing any special treatment. In the notching process, the properties of the upper and lower surfaces are not particularly changed by notching, and thus it is sufficient to prepare only a roll map of a single plane regardless of the upper and lower surfaces of the electrode.

In the roll map, electrode manufacturing history data in a series of electrode manufacturing processes, including an electrode coating process, a roll press process, a notching process, etc., may be recorded to specify the cause of the defect in relation to a relationship between subsequent processes. The server 1200 stores roll maps of a plurality of preceding processes of a first electrode sheet and a second electrode sheet respectively related to a first electrode and a second electrode that are laminated in the lamination process. For example, the roll maps of FIG. 7 may be roll maps of a plurality of preceding processes (the coating, roll pressing, and notching processes) for the first electrode sheet.

The roll maps include roll map coordinates that represent positions on the first electrode sheet. The server 1200 may align the roll maps as shown in FIG. 7 such that the roll maps of the processes correspond to parts of the same real electrode sheet.

FIG. 7 illustrates that a roll map coordinate ①, a roll map coordinate ②, and a roll map coordinate ③ of the first electrode sheet in the notching process are '90.04', '189.78', and '220.37', respectively. In FIG. 7, parts of the roll maps of the roll pressing process and the coating process that respectively correspond to the roll map coordinates '90.04', '189.78', and '220,37' of the notching process are indicated by dashed lines on the roll map of the notching process. Accordingly, roll map coordinates of the corresponding parts of the roll maps of the roll pressing process and the coating process may be searched for from the roll maps of the roll pressing process and the coating process or, the roll map of the notching process or through an arithmetic operation. However, the roll map coordinates of the roll pressing process and the coating process may be different from the roll map coordinates of the notching process. FIG. 7 merely illustrates that the roll map coordinates of the notching process may correspond to roll map coordinates of other processes, and thus actual roll map coordinates of the corresponding parts of the roll maps may vary in each process.

Electrode IDs EID of different sequence numbers may be allocated to the parts of the first electrode sheet corresponding to the roll map coordinates ①, ②, and ③.

FIG. 8 illustrates an example of the first coordinate-related electrode ID data EIDD1 of the notching process. FIG. 8 illustrates that an electrode ID EID 'SBKF010098' in the notching process and a roll map coordinate (first coordinate) '89.79' of a first electrode sheet corresponding thereto correspond to each other. In addition, a point in time when the electrode ID EID and the roll map coordinates are obtained, and a lot ID of the first electrode sheet are also illustrated. However, FIG. 8 is only an example, and the first coordinate-related electrode ID data EIDD1 may further include inspection and/or measurement data at the point in time or additional process event data.

As described above, the first coordinate-related electrode ID data EIDD1 may be obtained in the notching process, and roll maps of other processes corresponding to an electrode ID and the first coordinate in the notching process may be compared with each other. Accordingly, the first coordinate-related electrode ID data EIDD1 may be matched to a corresponding roll map coordinate and process event data in another process.

In the lamination process, second coordinate-related electrode ID data EIDD2 may be obtained. The second coordinate-related electrode ID data EIDD2 includes an electrode ID EID, a coordinate of a first electrode (e.g., a negative electrode) matching the electrode ID EID, and a coordinate of a second electrode (e.g., a positive electrode) matching the electrode ID EID.

Therefore, the first coordinate-related electrode ID data EIDD1 with the same electrode ID as the electrode ID EID included in the second coordinate-related electrode ID data EIDD2 may be related. Accordingly, at least one of the electrode ID EID of the second coordinate-related electrode ID data EIDD2, the coordinate of the first electrode matching the electrode ID EID, and the coordinate of the second electrode matching the electrode ID EID may be matched to the electrode ID EID and the first coordinate included in the first coordinate-related electrode ID data EIDD1. In addition, corresponding roll map coordinates in a plurality of preceding processes (the coating process, the roll pressing process, the slitting process, etc.) may be matched to the first coordinate.

In conclusion, the server 1200 may match at least one of the electrode ID EID included in the second coordinate-related electrode ID data EIDD2 in the lamination process, the coordinate of the first electrode matching the electrode ID EID, and the coordinate of the second electrode matching the electrode ID EID to a corresponding roll map coordinate in the plurality of preceding processes (the coating process, the roll pressing process, the slitting process, and the notching process).

In FIG. 10, a data set (the second coordinate-related electrode ID data EIDD2) obtained in the lamination process is indicated by PD1, EID, Ca, and Cb. PD1 denotes process event data of the lamination process, EID denotes an electrode ID at a point in time when the process event data is obtained, and Ca and Cb respectively denote a coordinate of a first electrode matching the electrode ID and a coordinate of a second electrode matching the electrode ID.

When an electrode ID in the notching process corresponding to the electrode ID EID is searched for, the second coordinate-related electrode ID data may be matched to the first coordinate-related electrode ID data. A data set obtained in the notching process is indicated by PDn, EID, and Cn. PDn denotes process event data of the notching process, EID denotes an electrode ID that is obtained at a point in time when the process event data is obtained and is the same as the electrode ID in the lamination process, and Cn denotes a coordinate of a first electrode sheet matching the electrode ID, i.e., a first coordinate. Although not shown in FIG. 10, a coordinate (a first coordinate) of a second electrode sheet in the notching process corresponding to the coordinate Cb of the second electrode in the lamination process may also be obtained.

As described above, roll map coordinates C1, C2, ..., Cn of the first electrode sheet in a plurality of preceding processes corresponding to the electrode ID EID of the notching process and the first coordinate Cn may be obtained. In addition, process event data PD1, PD2, ..., PDn related to these roll map coordinates may be obtained from the roll maps of the plurality of preceding processes. Although not shown in FIG. 10, roll map coordinates in the plurality of preceding processes corresponding to the coordinate Cb of the second electrode in the lamination process, and process event data related thereto may be obtained.

FIG. 9 illustrates a subsequent-process event data matching unit according to example embodiments. FIG. 10 illustrates matching of data of a battery manufacturing system according to example embodiments.

The battery manufacturing system 10 of the present invention further includes a subsequent-process event data matching part 610 configured to match at least one of the electrode ID, the coordinate of the first electrode matching the electrode ID, and the coordinate of the second electrode matching the electrode ID to process event data obtained in a plurality of subsequent processes after the combining of the first electrode and the second electrode and/or an ID of at least one higher battery assembly selected from among:

1) an assembly ID AID of an electrode assembly including at least one assembly of the first electrode and the second electrode;
2) an intermediate product ID HID of a battery intermediate product including the electrode assembly;
3) a cell ID CID of a battery cell including the electrode assembly or the battery intermediate product;
4) a stack ID SID of a battery cell stack including a plurality of such battery cells;
5) a module ID MID of a battery module including the battery cell stack; and
6) a pack ID PID of a battery pack including a plurality of such battery modules.

The battery manufacturing system 10 of the present invention may include, for example, the subsequent-process event data matching part 610 as shown in FIG. 9. The subsequent-process event data matching part 610 may be a process controller that manages each subsequent process. Specifically, the process controller may be a programmable logic controller (PLC). The PLC may be defined as a control device used for maintenance, management, automatic control, and monitoring of a process system for manufacturing a battery. The process controller may include a main control part 611 as shown in FIG. 9. The main control part 611 may control overall operations of the process controller and an overall flow of a process. The subsequent-process event data matching part 610 may include an electrode ID collector 612 and a process event data collector 613. The electrode ID collector 612 may be, for example, a barcode reader (BCR). The process event data collector 613 may be an inspection and/or measuring device installed in each process. For example, in an activation process, inspection and/or measurement data may be obtained from a measuring device that measures a charge/-discharge capacity, a temperature, etc., of a cell to be activated. Alternatively, a PLC of each process may collect process event data such as equipment data and time series data.

The subsequent-process event data matching part 610 may match the process event data to the electrode ID. The matched electrode ID and data of each subsequent process may be transmitted to the server 1200. The server 1200 may match the electrode ID and event data of each subsequent process to roll map coordinates of preceding processes stored in the server 1200 and/or process event data matching the roll map coordinates, the first coordinate-related electrode ID data, and the second coordinate-related electrode ID data.

Meanwhile, as the subsequent processes are performed, a plurality of electrodes are bundled together to form electrode assemblies or electrode assemblies are bundled together to form larger units (e.g., a battery intermediate product, a battery cell, a battery cell stack, a battery module, or a battery pack). An identification sign (ID) may be allocated to such a higher battery assembly with an electrode to which an electrode ID EID is allocated. One higher battery assembly may include a plurality of lower battery assemblies. Referring to FIG. 9, the subsequent-process event data matching part 610 includes a higher battery assembly ID generator 614. The higher battery assembly ID generator 614 may allocate a physical ID or a virtual ID to the higher battery assembly. For example, the higher battery assembly ID generator 614 may be an ID marker. Alternatively, the higher battery assembly ID generator 614 may be a virtual ID generating device capable of specifying a higher battery assembly by generating certain count information using a tap sensor or trigger board.

FIG. 10 illustrates IDs of various types of higher battery assemblies in a plurality of subsequent processes.

For example, in the lamination process, an electrode assembly may be formed by stacking or folding at least one assembly (e.g., a mono cell or a bi-cell) in which a first electrode and a second electrode are combined together. That is, a stacking cell type electrode assembly is manufactured by the lamination and stacking (L&S) process, and a folding cell type electrode assembly is manufactured by the lamination and folding (L&F) process. In a process such as the ZZS process or the AZS process, electrodes on which electrode tabs are formed are sequentially stacked between zigzag-shaped separators to simultaneously combine and stack the electrodes, thereby manufacturing an electrode assembly.

When an ID of the electrode assembly is AID, AID may correspond to a plurality of electrode IDs EID1, EID2, ... included in the electrode assembly. Process event data PDa obtained in an assembly process such as the L&S or L&F process or the ZZS or AZS process may be collected by the process event data collector 613 and be matched to AID and the plurality of electrode IDs EID1, EID2, .... FIG. 10 illustrates data sets PDa, AID, EID1, EID2, ... in the assembly process.

The electrode assembly is accommodated in a housing and an electrolyte is injected to perform the activation process. A battery cell on which the activation process is not performed is not a finished product, and items including an unfinished electrode assembly are battery intermediate products. An intermediate product ID HID may be allocated to such a battery intermediate product and correspond to a plurality of AIDs AID1, AID2, ... and a plurality of electrode IDs EID1, EDI2, .... Process event data PDb of an intermediate product manufacturing process may correspond to HID, AIDs, and EIDs.

A cell ID CID may be allocated to a battery cell completed after the activation process. A plurality of battery cells may be stacked to form a stack. At least one stack may be accommodated in a module housing to form a module. A plurality of modules may be accommodated in a pack housing to form a battery pack. A cell ID CID, a stack ID SID, a module ID MID, and a pack ID PID are allocated to the battery cell, a cell stack, a module, and a pack, respectively. As described above, an ID of one higher battery assembly may be related to IDs of a plurality of lower battery assemblies and ultimately be related to an electrode ID EID in the coupling process and the notching process. In the relating of the ID of the higher battery assembly, process event data of each process is related to an ID of the process.

Therefore, according to the present invention, an ID of a higher battery assembly in a plurality of subsequent processes and process event data may be matched to each other, based on second coordinate-related electrode ID data (particularly, an electrode ID) of a coupling process. Furthermore, the second coordinate-related electrode ID data of the coupling process may be related to first coordinate-related electrode ID data of the notching process, which is a preceding process, and may be related to roll map coordinates and process event data in the coating, roll pressing and slitting processes, which are electrode manufacturing processes.

In conclusion, according to the present invention, it is possible to track the history of all products derived from electrodes in all processes from the electrode manufacturing processes to a battery finished product manufacturing process.

[Embodiments of the Present Invention]

(Second Embodiment)

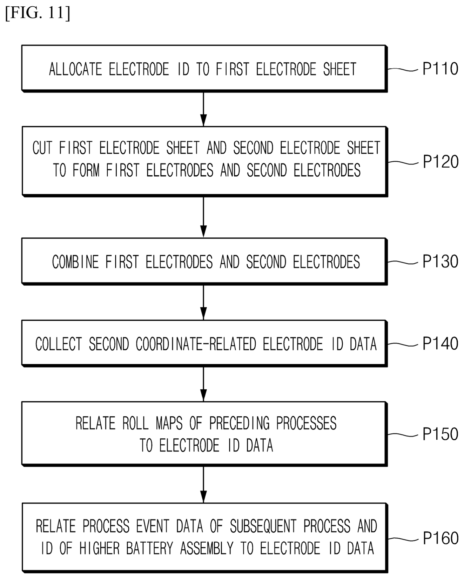

FIG. 11 is a flowchart of a battery manufacturing method according to example embodiments.

Referring to FIGS. 2 and 11, in operation P110, an electrode ID may be allocated to the first electrode sheet ES4 in the notching process. After performing notching by the notching machine 415, the ID marker 433 marks the electrode ID on parts of electrode tabs formed on the first electrode sheet ES4 at intervals of a certain pitch to allocate an electrode ID EID.

As the electrode ID EID is sensed by the first electrode ID reader 435 in the notching process, the electrode ID EID and a first coordinate that is a coordinate of a first electrode sheet corresponding to the electrode ID may be obtained. The electrode ID EID and the first coordinate may be included in first coordinate-related electrode ID data EIDD1. The first coordinate-related electrode ID data EIDD1 may be transmitted from the notching controller 440 to the server 1200, together with coordinate-related inspection and/or measurement data CMD4 or other additional process event data.

Next, in operation P120, in the coupling process (e.g., the lamination process), a plurality of first electrodes with the electrode ID may formed from the first electrode sheet and a plurality of second electrodes may be formed from a second electrode sheet. That is, a first electrode sheet ESN and a second electrode sheet ESP may be cut to form first electrodes EPN and second electrodes EPP.

Referring to FIGS. 3, 4, and 11, a plurality of negative electrodes EPN (first electrodes) may be cut in units of substantially constant pitches by the negative electrode cutter 513N. A plurality of positive electrodes EPP (second electrodes) may be cut in units of substantially constant pitches by the positive electrode cutter 513P. Each of the plurality of positive electrodes EPP may include a positive electrode tab TP, and each of the plurality of negative electrodes EPN may include a negative electrode tab TN.

Next, in operation P130, the plurality of positive electrodes EPP and the plurality of negative electrodes EPN may be coupled to each other. The plurality of positive electrodes EPP and the plurality of negative electrodes EPN may be coupled together with the separator sheets SS1 and SS2 to prevent a short circuit. The plurality of positive electrodes EPP, the plurality of negative electrodes EPN, and the separator sheets SS1 and SS2 may be pressed by a nip roll. A mono-cell MC may be provided by cutting the separator sheets SS1 and SS2 by the separator cutter 517. Alternatively, in the ZZS process or the AZS process, an electrode assembly may be manufactured by sequentially stacking the positive electrodes EPP and the negative electrodes EPN on a zigzag-shaped separator.

Next, in operation P140, second coordinate-related electrode ID data EIDD2 may be collected. The second coordinate-related electrode ID data EIDD2 may be collected by matching at least one of coordinates of the plurality of positive electrodes EPP and coordinates of the plurality of negative electrodes EPN to the electrode ID EID. The second coordinate-related electrode ID data EIDD2 may be collected by the controller 540 and stored in the server 1200.

Next, in operation P150, roll maps of preceding processes may be related to electrode IDs of the negative electrodes EPN. The roll maps may be produced in an electrode process (including coating, roll pressing, and selective slitting) and the notching process for the manufacture of a positive electrode roll ERP and a negative electrode roll ERN. Thus, coordinates indicating positions on the first electrode sheet and the second electrode sheet may be obtained in each process when in a plurality of preceding processes before the allocation of the electrode ID, each of the negative electrode sheet (first electrode sheet) and the positive electrode sheet (second electrode sheet) is moved while a certain process is performed thereon. The coordinate of the first electrode sheet and the coordinate of the second electrode sheet in each process may be roll map coordinates collected based on an input amount and/or an exhaustion amount of the first or second electrode sheet in a plurality of processes.

At least one coordinate among the roll map coordinate of the first electrode sheet and the roll map coordinate of the second electrode sheet in each process may be matched to at least one of the electrode ID, a coordinate of a first electrode matching the electrode ID, and a coordinate of a second electrode matching the electrode ID. In this case, the second coordinate-related electrode ID data may be matched to the first coordinate-related electrode ID data. Thus, a first coordinate included in the first coordinate-related electrode ID data may be matched to an electrode ID included in the second coordinate-related electrode ID data, the coordinate of the first electrode, and the coordinate of the second electrode.

Thereafter, in operation P160, at least one of the electrode ID, the coordinate of the first electrode matching the electrode ID, and the coordinate of the second electrode matching the electrode ID may be matched to an ID of a higher battery assembly and/or process event data obtained in a subsequent process by, for example, the subsequent-process event data matching part 610 of FIG. 9.

In this case, the ID of the higher battery assembly may include at least one of:

1) an assembly ID AID of an electrode assembly including at least one assembly of the first electrode and the second electrode;
2) an intermediate product ID HID of a battery intermediate product including the electrode assembly;
3) a cell ID CID of a battery cell including the electrode assembly or the battery intermediate product;
4) a stack ID SID of a battery cell stack including a plurality of such battery cells;
5) a module ID MID of a battery module including the battery cell stack; and
6) a pack ID PID of a battery pack including a plurality of such battery modules.

(Third Embodiment)

According to the present invention, workpieces, intermediate products, and a product whose quality traceabilities are ensured may be provided from the manufacture of electrodes to the manufacture of a battery finished product.

According to the present invention, an electrode assembly (an electrode assembly stacked in a zigzag form by the stack cell process, the folding cell process, the ZZS process of the AZS process) that includes at least one assembly (e.g., at least one mono-cell or bi-cell) of a first electrode (e.g., a negative electrode) with an electrode ID EID and a second electrode (e.g., a positive electrode) with a coordinate matching the electrode ID and has an assembly ID AID may be provided.

The present invention may provide at least one higher battery assembly including the electrode assembly and selected from among:

1) a battery intermediate product including the electrode assembly;
2) a battery intermediate product that includes the electrode assembly and has an intermediate product ID HID corresponding to the assembly ID AID;
3) a battery cell including the electrode assembly or the battery intermediate product;
4) a battery cell including the electrode assembly or the battery intermediate product, and having a cell ID CID corresponding to the electrode assembly ID EID or the intermediate product ID HID;
5) a battery cell stack including a plurality of such battery cells;
6) a battery cell stack including a plurality of such battery cells and having a stack ID SID corresponding to the cell ID CID;
7) a battery module including the battery cell stack;
8) a battery module including the battery cell stack and having a module ID MID corresponding to the stack ID SID;
9) a battery pack including a plurality of such battery modules; and
10) a battery pack including a plurality of such battery modules and having a pack ID PID corresponding to the module ID MID.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

(Reference Numerals)

10: battery manufacturing system
100: coating device
200: roll pressing device
300: slitting device
400: notching device
500: lamination devices
600: subsequent-process device
1100: EIF
1200: server, 1210: first server, 1220: second server, 1230: third server
1300: display device
411: unwinder
413: rewinder
421, 423: rotary encoder
415: notching machine
433: ID marker
431: inspection and/or measuring device
435: first electrode ID reader
441: roll map PLC
443: process PLC
440: notching controller
511P, 511N, 511S1, 511S2: unwinder
513P: positive electrode cutter, 513N: negative electrode cutter
515: guide roll
517: separator cutter
521P, 521N: rotary encoder
523P, 523N: joint sensor
525: electrode gap sensor
527: second electrode ID reader
540: controller

## Claims

1. A battery manufacturing system comprising:

   a coupling device configured to form a plurality of first electrodes including an electrode identifier (ID) from a first electrode sheet to which the electrode ID is allocated at intervals of a certain pitch, form a plurality of second electrodes from a second electrode sheet, and combine the plurality of first electrodes and the plurality of second electrodes,
   wherein the coupling device comprises a controller configured to collect coordinate-related electrode ID data including the electrode ID and at least one of a coordinate of a first electrode and a coordinate of a second electrode that match the electrode ID, based on a first input amount of the first electrode sheet, a second input amount of the second electrode sheet, and an electrode ID sensing signal.

2. The battery manufacturing system of claim 1, further comprising a server configured to store the coordinate-related electrode ID data.

3. The battery manufacturing system of claim 1, further comprising a notching device configured to allocate the electrode ID to the first electrode sheet at the intervals of the certain pitch.

4. The battery manufacturing system of claim 3, wherein the notching device comprises:

   a notching machine configured to form electrode tabs on the first electrode sheet at the intervals of the certain pitch;

an ID marker configured to mark the electrode ID on the electrode tabs; and
a notching controller configured to collect the coordinate-related electrode ID data including the electrode ID and a first coordinate of a position of the first electrode sheet matching the electrode ID in the notching process.

5. The battery manufacturing system of claim 4, wherein the first coordinate is obtained based on at least one of an unwinding amount signal and a winding amount signal of the first electrode sheet when the electrode ID is sensed in the notching process.

6. The battery manufacturing system of claim 1, wherein the coupling device comprises:

a first electrode cutter configured to cut the first electrode sheet unwound from a first electrode roll to provide the plurality of first electrodes;
a second electrode cutter configured to cut the second electrode sheet unwound from a second electrode roll to provide the plurality of second electrodes; and
a second electrode ID reader configured to sense an electrode ID of an electrode tab of each of the plurality of first electrodes to generate the electrode ID sensing signal.

7. The battery manufacturing system of claim 6, wherein the first input amount of the first electrode sheet is calculated based on a pitch between the plurality of first electrodes and a cut count of the first electrode cutter, and the second input amount of the second electrode sheet is calculated based on a pitch between the plurality of second electrodes and a cut count of the second electrode cutter.

8. The battery manufacturing system of claim 6, wherein the coupling device comprises:

a first rotary encoder configured to generate a first input amount signal indicating the first input amount of the first electrode sheet; and
a second rotary encoder configured to generate a second input amount signal indicating the second input amount of the second electrode sheet.

9. The battery manufacturing system of claim 2, wherein the server is configured to store a roll map of each process that includes roll map coordinates indicating positions on the first electrode sheet and the second electrode sheet in a plurality of preceding processes before the allocation of the electrode ID, and matches at least one of the electrode ID, the coordinate of the first electrode matching the electrode ID, and the coordinate of the second electrode matching the electrode ID to the roll map coordinates.

10. The battery manufacturing system of claim 2, further comprising a subsequent-process event data matching part configured to match at least one of the electrode ID, the coordinate of the first electrode matching the electrode ID, and the coordinate of the second electrode matching the electrode ID to at least one of process event data obtained in a plurality of subsequent processes after the combining of the first electrode and the second electrode and an ID of at least one higher battery assembly selected from among:

1) an assembly ID of an electrode assembly including at least one assembly of the first electrode and the second electrode;
2) an intermediate product ID of a battery intermediate product including the electrode assembly;
3) a cell ID of a battery cell including the electrode assembly or the battery intermediate product;
4) a stack ID of a battery cell stack including a plurality of battery cells;
5) a module ID of a battery module including the battery cell stack; and
6) a pack ID of a battery pack including a plurality of battery modules.

11. A battery manufacturing method comprising:

allocating an electrode identifier (ID) to a first electrode sheet at intervals of a certain pitch;
forming a plurality of first electrodes with the electrode ID from the first electrode sheet and a plurality of second electrodes from a second electrode sheet;
combining the plurality of first electrodes and the plurality of second electrodes; and
collecting coordinate-related electrode ID data including the electrode ID and at least one of a coordinate of a first electrode and a coordinate of a second electrode that match the electrode ID.

12. The battery manufacturing method of claim 11, further comprises allocating the electrode ID to electrode tabs formed on the first electrode sheet at the intervals of the certain pitch by notching.

13. The battery manufacturing method of claim 12, further comprising:

> obtaining as a first coordinate, information of a position of the first electrode sheet corresponding to the electrode ID in the notching process; and
> matching to the first coordinate, at least one of the electrode ID, the coordinate of the first electrode matching the electrode ID, and the coordinate of the second electrode matching the electrode ID.

14. The battery manufacturing method of claim 11, wherein, collecting the coordinate-related electrode ID data comprises collecting based on a first input amount of the first electrode sheet, a second input amount of the second electrode sheet, and an electrode ID sensing signal,
wherein the electrode ID sensing signal is generated based on sensing of the electrode ID.

15. The battery manufacturing method of claim 14, wherein the first input amount of the first electrode sheet is calculated based on a pitch between the plurality of first electrodes and a cut count of a first electrode cutter, and
the second input amount of the second electrode sheet is calculated based on a pitch between the plurality of second electrodes and a cut count of a second electrode cutter.

16. The battery manufacturing method of claim 14, wherein the first input amount of the first electrode sheet is determined by a first input amount signal generated by a first rotary encoder configured to sense an amount of rotation of a first electrode unwinder configured to unwind the first electrode sheet, and
the second input amount of the second electrode sheet is determined by a second input amount signal generated by a second rotary encoder configured to sense an amount of rotation of a second electrode unwinder configured to unwind the second electrode sheet.

17. The battery manufacturing method of claim 11, further comprising, in a plurality of preceding processes before the allocation of the electrode ID, obtaining coordinates indicating positions on the first and second electrode sheets in each process when the first electrode sheet and the second electrode sheet are moved while a certain operation is performed on the first and second electrode sheets, and matching at least one of a coordinate of the first electrode sheet and a coordinate of the second electrode sheet in each process to at least one of the electrode ID, the coordinate of the first electrode matching the electrode ID, and the coordinate of the second electrode matching the electrode ID.

18. The battery manufacturing method of claim 11, further comprising matching at least one of the electrode ID, the coordinate of the first electrode matching the electrode ID, and the coordinate of the second electrode matching the electrode ID to at least one of process event data obtained in a plurality of subsequent processes after the combining the first electrode and the second electrode and an ID of at least one higher battery assembly selected from among:

> 1) an assembly ID of an electrode assembly including at least one assembly of the first electrode and the second electrode;
> 2) an intermediate product ID of a battery intermediate product including the electrode assembly;
> 3) a cell ID of a battery cell including the electrode assembly or the battery intermediate product;
> 4) a stack ID of a battery cell stack including a plurality of battery cells;
> 5) a module ID of a battery module including the battery cell stack; and
> 6) a pack ID of a battery pack including a plurality of battery modules.

19. An electrode assembly comprising at least one assembly of a first electrode with an electrode identifier (ID) and a second electrode with a coordinate matching the electrode ID,
wherein the electrode assembly includes an assembly ID corresponding to the electrode ID.

20. At least one higher battery assembly including the electrode assembly of claim 19, wherein the at least one higher battery assembly is selected from among:

> 1) a battery intermediate product including the electrode assembly;
> 2) a battery intermediate product including the electrode assembly and having an intermediate product ID corresponding to the assembly ID;
> 3) a battery cell including the electrode assembly or the battery intermediate product;

4) a battery cell including the electrode assembly or the battery intermediate product, and having a cell ID corresponding to the electrode assembly ID or the intermediate product ID;

5) a battery cell stack including a plurality of battery cells;

6) a battery cell stack including a plurality of battery cells and having a stack ID corresponding to the cell ID;

7) a battery module including the battery cell stack;

8) a battery module including the battery cell stack and having a module ID corresponding to the stack ID;

9) a battery pack including a plurality of battery modules; and

10) a battery pack including a plurality of battery modules and having a pack ID corresponding to the module ID.

[FIG. 1]

[FIG. 2]

[FIG. 3]

<u>500</u>

[FIG. 4]

EP 4 654 270 A1

[FIG. 5]

527

ESP    523P    513P    EPP

ERP
511P

OLP1

OLP2

OLP3

[FIG. 6]

527

ESN    523N    513N    EPN

ERN
511N

OLN1

OLN2

OLN3

28

[FIG. 7]

RAW MATERIAL

COATING

ROLL PRESSING

NOTCHING

ROLL MAP COORDINATE :90.04

ROLL MAP COORDINATE :189.78

ROLL MAP COORDINATE :220.37

[FIG. 8]

| TIME | EID | INPUT LOT ID | ROLL MAP COORDINATE |
|---|---|---|---|
| 21-10-15 16:32 | SBKF010098 | FAAGJ114R1 | 89.79 |

[FIG. 9]

610

PROCESS CONTROLLER

611 — MAIN CONTROLLER

613 — PROCESS EVENT DATA COLLECTOR

612 — ELECTRODE ID COLLECTOR

614 — HIGHER BATTERY ASSEMBLY ID GENERATOR

[FIG. 10]

[FIG. 11]

| ALLOCATE ELECTRODE ID TO FIRST ELECTRODE SHEET | P110 |

↓

| CUT FIRST ELECTRODE SHEET AND SECOND ELECTRODE SHEET TO FORM FIRST ELECTRODES AND SECOND ELECTRODES | P120 |

↓

| COMBINE FIRST ELECTRODES AND SECOND ELECTRODES | P130 |

↓

| COLLECT SECOND COORDINATE-RELATED ELECTRODE ID DATA | P140 |

↓

| RELATE ROLL MAPS OF PRECEDING PROCESSES TO ELECTRODE ID DATA | P150 |

↓

| RELATE PROCESS EVENT DATA OF SUBSEQUENT PROCESS AND ID OF HIGHER BATTERY ASSEMBLY TO ELECTRODE ID DATA | P160 |

## INTERNATIONAL SEARCH REPORT

International application No.

**PCT/KR2024/014391**

### A. CLASSIFICATION OF SUBJECT MATTER

**H01M 4/04**(2006.01)i; **G06Q 50/04**(2012.01)i; **G01B 7/004**(2006.01)i; **B65H 35/00**(2006.01)i; **G06K 19/06**(2006.01)i

According to International Patent Classification (IPC) or to both national classification and IPC

### B. FIELDS SEARCHED

Minimum documentation searched (classification system followed by classification symbols)

H01M 4/04(2006.01); H01M 10/04(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 전극 아이디(electrode identification), 투입량(input amount), 감지 신호(sensing signal), 좌표(coordination), 컨트롤러(controller), 노칭(notching), 마킹(marking), 커터(cutter), 컷 카운트(cut count), 롤맵(roll map), 어셈블리 아이디(assembly identification)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0109692 A (LG ENERGY SOLUTION, LTD.) 05 August 2022 (2022-08-05) See paragraphs [0003] and [0067]; and figure 6. | 1-20 |
| A | KR 10-2023-0112517 A (JUN, Tae Ho) 27 July 2023 (2023-07-27) See paragraphs [0039], [0040], [0059], [0060] and [0077]. | 1-20 |
| DA | KR 10-2023-0025288 A (LG ENERGY SOLUTION, LTD.) 21 February 2023 (2023-02-21) See claims 1-15. | 1-20 |
| A | JP 2009-266739 A (HITACHI VEHICLE ENERGY LTD.) 12 November 2009 (2009-11-12) See claims 1-15; and figures 8 and 9. | 1-20 |
| A | WO 2023-130338 A1 (CONTEMPORARY AMPEREX TECHNOLOGY CO., LIMITED) 13 July 2023 (2023-07-13) See claims 1-23. | 1-20 |

☐ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2025** | **06 January 2025** |

| Name and mailing address of the ISA/KR | Authorized officer |
|---|---|
| **Korean Intellectual Property Office** Government Complex-Daejeon Building 4, 189 Cheongsa-ro, Seo-gu, Daejeon 35208 | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/014391** |

| Patent document cited in search report | | | Publication date (day/month/year) | Patent family member(s) | | | Publication date (day/month/year) |
| --- | --- | --- | --- | --- | --- | --- | --- |
| KR | 10-2022-0109692 | A | 05 August 2022 | CN | 115398692 | A | 25 November 2022 |
| | | | | EP | 4120413 | A1 | 18 January 2023 |
| | | | | US | 2023-0158697 | A1 | 25 May 2023 |
| | | | | WO | 2022-164209 | A1 | 04 August 2022 |
| KR | 10-2023-0112517 | A | 27 July 2023 | None | | | |
| KR | 10-2023-0025288 | A | 21 February 2023 | CN | 116724406 | A | 08 September 2023 |
| | | | | EP | 4266394 | A1 | 25 October 2023 |
| | | | | JP | 2024-512864 | A | 21 March 2024 |
| | | | | JP | 7551227 | B2 | 17 September 2024 |
| | | | | KR | 10-2593244 | B1 | 25 October 2023 |
| | | | | US | 11984559 | B2 | 14 May 2024 |
| | | | | US | 2024-0047763 | A1 | 08 February 2024 |
| | | | | US | 2024-0243367 | A1 | 18 July 2024 |
| | | | | WO | 2023-018135 | A1 | 16 February 2023 |
| JP | 2009-266739 | A | 12 November 2009 | JP | 5415017 | B2 | 12 February 2014 |
| WO | 2023-130338 | A1 | 13 July 2023 | CN | 116982185 | A | 31 October 2023 |
| | | | | EP | 4369447 | A1 | 15 May 2024 |
| | | | | JP | 2024-526775 | A | 19 July 2024 |
| | | | | KR | 10-2024-0019842 | A | 14 February 2024 |
| | | | | US | 2024-0154149 | A1 | 09 May 2024 |

Form PCT/ISA/210 (patent family annex) (July 2022)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230128126
- KR 1020230025288